# EUROPEAN PATENT APPLICATION

(11) **EP 4 847 569 A1**
(43) Date of publication of application: **02.12.2026**
(21) Application number: 25836665.7
(22) Date of filing: 29.05.2025
(51) Int. Cl.: C09D 1/00, B05D 1/38, B05D 3/10, B05D 5/00, B05D 7/24, C09D 7/65, C09D 201/00, C09K 3/00

(54) **HYDROPHILIC COATING FILM, HYDROPHILIC COATING LIQUID, AND METHOD FOR FORMING HYDROPHILIC COATING FILM**

(30) Priority: 09.07.2024 JP 2024110345; 14.03.2025 JP 2025040771
(71) Applicant: Hardolass Holdings Co.,Ltd., Tokyo 135-0064 (JP)
(72) Inventor: SEKI, Takashi, Tokyo 104-6017 (JP); OGATA, Maho, Tokyo 104-6017 (JP); TOTSUKA, Akane, Tokyo 104-6017 (JP); NONOSHITA, Daiki, Tokyo 104-6017 (JP); TAMAMURA, Ryou, Tokyo 104-6017 (JP); ISONO, Satomi, Tokyo 104-6017 (JP); EDO, Takashi, Tokyo 104-6017 (JP); OBATA, Yoshie, Tokyo 104-6017 (JP); YAMAWAKU, Takeshi, Tokyo 104-6017 (JP); ISHIDA, Kenji, Tokyo 104-6017 (JP); IKEDA, Masanori, Tokyo 104-6017 (JP)
(74) Representative: Ashton, Gareth Mark
(86) International application number: PCT/JP2025/019556
(87) International publication number: WO 2026/014101

(57) **Abstract**

To provide a hydrophilic coating film having a small contact angle of water with respect to a film surface, being able to increase a contact area of water droplets with respect to the film surface, having excellent hydrophilicity and antifouling property, and being able to readily wash off adhering soil by washing with water.

The hydrophilic coating film is formed of an inorganic-based porous coating film having a large number of voids and a hydrophilic organic compound that has penetrated into the voids of the inorganic-based porous coating film, and has a contact angle of water measured according to JIS R3257 of 20° or less. The inorganic-based porous coating film includes inorganic-based fine particles of at least one type among silicon dioxide (SiO₂), aluminum oxide (Al₂O₃), zirconium oxide (ZrO₂), titanium oxide (TiO₂), and cerium oxide (CeO₂), and has an inorganic nanoporous structure made by a sol-gel method using at least one of silica sol, alumina sol, zirconia sol, titania sol, and ceria sol. The hydrophilic organic compound includes a betaine polymer having a cationic site and an anionic site in the same molecule.

## Description

### Technical Field

The present invention relates to a hydrophilic coating film and a hydrophilic coating liquid, and also relates to a method for forming a hydrophilic coating film.

### Background Art

As an example of coating inorganic-based particles with a hydrophilic resin, a hydrophilic coating film is disclosed, the hydrophilic coating film including a fluororesin film coated on a surface of a substrate, first hydrophilic spherical particles coated on the fluororesin film, partly embedded in the fluororesin film, and partly exposed from the fluororesin film, and second hydrophilic particles coated on the fluororesin film, partly embedded in the fluororesin film, and partly exposed from the fluororesin film, wherein an average particle diameter of the first hydrophilic spherical particles is 25 µm or more and 700 µm or less, and an average particle diameter of the second hydrophilic particles is 0.05 µm or more and 2 µm or less (see Patent Literature 1).

In addition, a surface treatment liquid and a hydrophilization treatment method are disclosed in which, in a polymerizable composition including a polymerizable compound (A), a polymerization initiator (B), inorganic fine particles (C), and a solvent (S), a polymerizable betaine compound (A1) having an ethylenically unsaturated double bond and a betaine structure and an adhesive polymerizable compound (A2) having an ethylenically unsaturated double bond and a specific type of adhesive group are used as the polymerizable compound (A), a water-soluble radical polymerization initiator (B1) is used as the polymerization initiator (B), and the inorganic fine particles (C) having a functional group capable of forming a covalent bond with a polymer of the polymerizable compound (A) are used (see Patent Literature 2).

### Citation List

### Patent Literatures

Patent Literature 1: JP 2019-89930 A
Patent Literature 2: JP 2022-129100 A

### Summary of Invention

### Technical Problem

In the hydrophilic coating film disclosed in Patent Literature 1, the first hydrophilic spherical particles and the second hydrophilic particles covering the fluororesin film gradually peel from the fluororesin film due to stress from the use environment, and the hydrophilicity gradually decreases, so that the hydrophilic function cannot be maintained for a long period. When hydrophilicity in the hydrophilic coating film decreases, washing off, with water, soil such as dust adhering to the fluororesin film that has water repellency and a large contact angle of water becomes difficult, the soil cannot be readily removed from the surface of the substrate by washing with water, the soil remains on the surface of the substrate, and the surface of the substrate cannot be cleaned.

In the polymerizable composition and hydrophilization treatment method disclosed in Patent Literature 2, in order to improve adhesion to inorganic fine particles, a polymerizable compound, a polymerization initiator, and inorganic fine particles are mixed, a coating film is formed on an object to be treated, polymerization is then advanced by heating, and a resin film is immobilized by bonding the resin film to a surface of the object to be treated; therefore, mere application without heating results in easy washing away in a water washing step. In addition, under conditions such as outdoor use, the hydrophilic polymerizable compound is washed away by exposure to rain or the like, and a durable hydrophilic coating film cannot be obtained. In many cases, the object to be treated cannot be heated, and obtaining a durable hydrophilic coating film merely by application at room temperature and drying of the solvent is required.

An object of the present invention is to provide a hydrophilic coating film and a hydrophilic coating liquid for forming the hydrophilic coating film, the hydrophilic coating film having a small contact angle of water with respect to a film surface, being able to increase a contact area of water droplets with respect to the film surface, having excellent hydrophilicity and antifouling property, and being able to readily wash off adhering soil by washing with water. Another object of the present invention is to provide a hydrophilic coating film and a hydrophilic coating liquid for forming the hydrophilic coating film, the hydrophilic coating film being able to prevent decreases in hydrophilicity and antifouling property due to stress from a use environment and being able to maintain a hydrophilic function and an antifouling function for a long period. Another object of the present invention is to provide a method for forming a hydrophilic coating film, the method being able to make a hydrophilic coating film capable of readily washing off adhering soil by washing with water, capable of preventing decreases in hydrophilicity and antifouling property due to stress from a use environment, and capable of maintaining a hydrophilic function and an antifouling function for a long period. Another object of the present invention is to provide a method for forming a hydrophilic coating film, the method being able to readily form a hydrophilic coating film at room temperature without heating.

### Solution to Problem

A hydrophilic coating film according to the present invention is formed of an inorganic-based porous coating film having a large number of nanosized voids and a hydrophilic organic compound that has penetrated into the voids of the inorganic-based porous coating film, and has a contact angle of water measured according to JIS R3257 of 20° or less.

As one example of the hydrophilic coating film, the contact angle of water measured according to JIS R3257 is 10° or less.

As another example of the hydrophilic coating film, the inorganic-based porous coating film includes inorganic-based fine particles of at least one type among silicon dioxide (SiO₂), aluminum oxide (Al₂O₃), zirconium oxide (ZrO₂), titanium oxide (TiO₂), and cerium oxide (CeO₂).

As another example of the hydrophilic coating film, the inorganic-based porous coating film has an inorganic nanoporous structure made by a sol-gel method using at least one of silica sol, alumina sol, zirconia sol, titania sol, and ceria sol.

As another example of the hydrophilic coating film, the hydrophilic organic compound includes a betaine polymer having a cationic site and an anionic site in the same molecule.

As another example of the hydrophilic coating film, a proportion of the betaine polymer in the hydrophilic organic compound is 20% or more.

As another example of the hydrophilic coating film, a porosity of the voids formed in the inorganic-based porous coating film is in a range of 20% to 70% with respect to a volume of the inorganic-based porous coating film.

As another example of the hydrophilic coating film, a film thickness of the hydrophilic coating film is in a range of 0.01 to 3 µm.

As another example of the hydrophilic coating film, the hydrophilic organic compound covers a surface of the inorganic-based porous coating film while penetrating into the voids of the inorganic-based porous coating film.

As another example of the hydrophilic coating film, an uppermost layer of the hydrophilic organic compound is located slightly below a surface of the inorganic-based porous coating film, and a portion of the inorganic-based porous coating film exposed upward from the uppermost layer of the hydrophilic organic compound is coated with an ultrathin film of the hydrophilic organic compound and forms fine irregularities on a surface of the hydrophilic coating film.

A hydrophilic coating liquid according to the present invention is formed of an inorganic-based coating liquid that makes an inorganic-based porous coating film having a large number of nanosized voids, and an organic-based coating liquid that includes a betaine polymer having a cationic site and an anionic site in the same molecule and makes a hydrophilic organic compound covering the inorganic-based porous coating film in a state in which the hydrophilic organic compound has penetrated into the voids of the inorganic-based porous coating film.

As one example of the hydrophilic coating liquid, a proportion of the betaine polymer in the hydrophilic organic compound is 20% or more.

As another example of the hydrophilic coating liquid, the inorganic-based coating liquid includes inorganic-based fine particles of at least one type among silicon dioxide (SiO₂), aluminum oxide (Al₂O₃), zirconium oxide (ZrO₂), titanium oxide (TiO₂), and cerium oxide (CeO₂), and a solid content concentration of the inorganic-based fine particles in the inorganic-based coating liquid is 0.3 to 50 wt%.

As another example of the hydrophilic coating liquid, an average particle diameter of the inorganic-based fine particles included in the inorganic-based coating liquid is 1 µm or less.

As another example of the hydrophilic coating liquid, a content of the hydrophilic organic compound in the organic-based coating liquid is in a range of 0.1 to 20 wt% with respect to a total weight of the organic-based coating liquid.

A method for forming a hydrophilic coating film, the hydrophilic coating film being made of an inorganic-based porous coating film having a large number of nanosized voids and a hydrophilic organic compound, includes: a cleaning step of, after cleaning a surface of a predetermined substrate with an alkaline detergent, cleaning the surface of the substrate with an acidic liquid; an inorganic-based porous coating film formation step of coating an inorganic-based coating liquid including inorganic-based fine particles on the surface of the substrate and forming the inorganic-based porous coating film in which an inorganic nanoporous structure having the large number of nanosized voids has been made by a sol-gel method; a hydrophilic organic compound formation step of coating an organic-based coating liquid including a betaine polymer having a cationic site and an anionic site in the same molecule on the surface of the substrate and forming, on the surface of the substrate, the hydrophilic organic compound including the betaine polymer in a state in which the organic-based coating liquid has penetrated into the voids of the inorganic-based porous coating film; and a water washing step of washing, with water, a surface of the hydrophilic coating film formed of the inorganic-based porous coating film and the hydrophilic organic compound.

As another example of the method for forming a hydrophilic coating film, in the inorganic-based porous coating film formation step, the inorganic-based porous coating film having an inorganic nanoporous structure is formed by a sol-gel method using at least one of silica sol, alumina sol, zirconia sol, titania sol, and ceria sol.

As another example of the method for forming a hydrophilic coating film, in the hydrophilic organic compound formation step, the inorganic-based porous coating film is covered with the organic-based coating liquid so that the inorganic-based porous coating film is not exposed from a surface of the hydrophilic organic compound, and the inorganic-based porous coating film is buried in the hydrophilic organic compound when the hydrophilic coating film is formed.

In the hydrophilic organic compound formation step, the inorganic-based coating liquid is coated on the surface of the substrate in a state in which the inorganic-based coating liquid is positioned slightly below the surface of the inorganic-based porous coating film so that the inorganic-based porous coating film is exposed upward from the uppermost layer of the hydrophilic organic compound, and, when the hydrophilic coating film is formed, the inorganic-based porous coating film is exposed upward from the uppermost layer of the hydrophilic organic compound, and a portion of the inorganic-based porous coating film exposed upward from the uppermost layer of the hydrophilic organic compound is coated with an ultrathin film of the hydrophilic organic compound and forms fine irregularities on the surface of the hydrophilic coating film.

As another example of the method for forming a hydrophilic coating film, in the water washing step, excess hydrophilic organic compound weakly bonded to the voids of the inorganic-based porous coating film, excluding the hydrophilic organic compound strongly bonded to the voids of the inorganic-based porous coating film among the hydrophilic organic compound, is washed away with water, and the hydrophilic organic compound that does not contribute to hydrophilicity is removed from the hydrophilic coating film.

### Advantageous Effects of Invention

According to the hydrophilic coating film according to the present invention, since the hydrophilic coating film is formed of an inorganic-based porous coating film having a large number of nanosized voids and a hydrophilic organic compound that has penetrated into the voids of the inorganic-based porous coating film, and the contact angle of water measured according to JIS R3257 is 20° or less, the hydrophilic coating film has excellent hydrophilicity and antifouling property, the contact angle of water with respect to the film surface of the hydrophilic coating film is small, the contact area of water with respect to the film surface of the hydrophilic coating film can be increased, and, when the hydrophilic coating film is washed with water, water broadly contacts the film surface of the hydrophilic coating film, so that soil adhering to the hydrophilic coating film can be readily washed off with water. In the hydrophilic coating film, since the hydrophilic organic compound penetrates into the large number of nanosized voids of the inorganic-based porous coating film, and the hydrophilic organic compound (hydrophilic organic film) is bonded to the voids of the inorganic-based porous coating film, the hydrophilic coating film has excellent strength, the hydrophilic organic compound does not peel off or disappear early from the hydrophilic coating film due to stress from a use environment, decreases in hydrophilicity and antifouling property in the hydrophilic coating film can be prevented, and the hydrophilic function and the antifouling function by the hydrophilic organic compound can be maintained for a long period.

Since the hydrophilic coating film has a contact angle of water measured according to JIS R3257 of 10° or less, the contact angle of water with respect to the film surface of the hydrophilic coating film is very small, the hydrophilic coating film has excellent hydrophilicity and antifouling property, the contact area of water with respect to the film surface of the hydrophilic coating film can be reliably increased, and, when the hydrophilic coating film is washed with water, water contacts a wide area of the film surface of the hydrophilic coating film, so that soil adhering to the hydrophilic coating film can be readily washed off with water.

In the hydrophilic coating film, in a case where the inorganic-based porous coating film includes inorganic-based fine particles of silicon dioxide (SiO₂), the hydrophilic organic compound is readily bonded to silicon dioxide, the hydrophilic organic compound that has penetrated into the large number of nanosized fine voids of the inorganic-based porous coating film readily bonds to voids including silicon dioxide, and the hydrophilic organic compound can be firmly bonded to the voids of the inorganic-based porous coating film. In the hydrophilic coating film, in a case where the inorganic-based porous coating film includes inorganic-based fine particles of aluminum oxide (Al₂O₃), the hydrophilic organic compound is readily bonded to aluminum oxide, the hydrophilic organic compound that has penetrated into the large number of nanosized fine voids of the inorganic-based porous coating film can be firmly bonded to voids including aluminum oxide, and salts such as magnesium, calcium, sodium, and silicon become less likely to adhere to the hydrophilic coating film due to the aluminum oxide, so that soil on the hydrophilic coating film due to adhesion of salts such as magnesium, calcium, sodium, and silicon to the hydrophilic coating film can be prevented. In the hydrophilic coating film, in a case where the inorganic-based porous coating film includes inorganic-based fine particles of zirconium oxide (ZrO₂), hardness of the inorganic-based porous coating film can be increased, and rigidity of the hydrophilic coating film can be increased. In the hydrophilic coating film, in a case where the inorganic-based porous coating film includes inorganic-based fine particles of titanium oxide (TiO₂), light and water contact the inorganic-based fine particles of titanium oxide, whereby the surface of the hydrophilic coating film is covered with hydrophilic groups, and a self-cleaning effect can be imparted to the hydrophilic coating film. In the hydrophilic coating film, in a case where the inorganic-based porous coating film includes inorganic-based fine particles of cerium oxide (CeO₂), hardness of the inorganic-based porous coating film can be increased, rigidity of the hydrophilic coating film can be increased, and an ultraviolet absorbing effect can be imparted to the hydrophilic coating film. The hydrophilic coating liquid can be bonded to the inorganic-based fine particles by covalent bonds, and hydrogen bonds, ionic bonds, hydrogen bonds, van der Waals bonds, and the like can also be utilized. In particular, by impregnating a betaine polymer into nanosized spaces, binding can be strengthened, and weather resistance can also be maintained. In addition, when forming the inorganic-based porous coating film, hydroxides or salts of Ca, Na, Mg, K, B, and the like, sodium silicate, resins, and the like may be added for the purpose of improving adhesion to the substrate. Furthermore, tetraalkoxysilane, alkyltrialkoxysilane, dialkyldialkoxysilane, and the like may be added.

Since the hydrophilic coating film has an inorganic nanoporous structure in which the inorganic-based porous coating film is made by a sol-gel method using at least one of silica sol, alumina sol, zirconia sol, titania sol, and ceria sol, the hydrophilic organic compound penetrates into the large number of nanosized fine voids of the inorganic nanoporous structure, and the hydrophilic organic compound (hydrophilic organic film) is bonded to the voids of the inorganic-based porous coating film, the hydrophilic coating film has excellent strength, the hydrophilic organic compound does not peel off or disappear early from the hydrophilic coating film due to stress from a use environment, the hydrophilic organic compound exists in the hydrophilic coating film for a long period, decreases in hydrophilicity and antifouling property in the hydrophilic coating film can be prevented, and the hydrophilic function and the antifouling function by the hydrophilic organic compound can be maintained for a long period.

In the hydrophilic coating film, because the hydrophilic organic compound includes a betaine polymer having a cationic site and an anionic site in the same molecule, the hydrophilic organic compound exhibits excellent hydrophilicity and antifouling property, the contact angle of water with respect to the film surface of the hydrophilic coating film can be reliably reduced, the contact area of water with respect to the film surface of the hydrophilic coating film can be reliably increased, and, when the hydrophilic coating film is washed with water, water contacts a wide area of the film surface of the hydrophilic coating film, so that soil adhering to the hydrophilic coating film can be readily washed off with water.

Since the proportion, in the hydrophilic organic compound, of the betaine polymer having a cationic site and an anionic site in the same molecule in the hydrophilic coating film is 20% or more, excellent hydrophilicity of the betaine polymer can be sufficiently utilized, the hydrophilic organic compound exhibits excellent hydrophilicity and antifouling property, the contact angle of water with respect to the film surface of the hydrophilic coating film can be reliably reduced, the contact area of water with respect to the film surface of the hydrophilic coating film can be reliably increased, and, when the hydrophilic coating film is washed with water, water contacts a wide area of the film surface of the hydrophilic coating film, so that soil adhering to the hydrophilic coating film can be readily washed off with water.

In the hydrophilic coating film, since the porosity of the voids formed in the inorganic-based porous coating film is in a range of 20 to 70% with respect to the volume of the inorganic-based porous coating film, a sufficient amount of the large number of nanosized fine voids is formed in the inorganic-based porous coating film, the hydrophilic organic compound penetrates into the voids, excellent hydrophilicity and antifouling property of the hydrophilic organic compound (hydrophilic organic film) can be sufficiently utilized, excellent hydrophilicity and antifouling property can be imparted to the hydrophilic coating film, and the surface of the substrate can be sufficiently protected by the hydrophilic coating film. In the hydrophilic coating film, because the hydrophilic organic compound (hydrophilic organic film) bonds to the large number of fine voids of the inorganic-based porous coating film, the hydrophilic coating film has excellent strength, the hydrophilic organic compound does not peel off or disappear early from the hydrophilic coating film due to stress from a use environment, the hydrophilic organic compound exists in the hydrophilic coating film for a long period, decreases in hydrophilicity and antifouling property in the hydrophilic coating film can be prevented, and the hydrophilic function and the antifouling function by the hydrophilic organic compound can be maintained for a long period.

Since the film thickness of the hydrophilic coating film is in a range of 0.01 to 3 µm, the hydrophilic coating film retains a predetermined strength, the surface of the substrate can be sufficiently protected by the hydrophilic coating film, the hydrophilic coating film has excellent flexibility, the hydrophilic coating film can follow deformation of the surface of the substrate, and a covering state of the hydrophilic coating film with respect to the surface of the substrate can be maintained.

In the hydrophilic coating film, since the hydrophilic organic compound covers the surface of the inorganic-based porous coating film while penetrating into the voids of the inorganic-based porous coating film, the hydrophilic coating film has excellent hydrophilicity due to the hydrophilic organic compound, the hydrophilic organic compound does not peel off or disappear early from the hydrophilic coating film due to stress from a use environment, the hydrophilic organic compound exists in the hydrophilic coating film for a long period, decreases in hydrophilicity and antifouling property in the hydrophilic coating film can be prevented, and the hydrophilic function and the antifouling function by the hydrophilic organic compound can be maintained for a long period.

In the hydrophilic coating film, since the uppermost layer of the hydrophilic organic compound is located slightly below the surface of the inorganic-based porous coating film, and a portion of the inorganic-based porous coating film exposed upward from the uppermost layer of the hydrophilic organic compound is coated with an ultrathin film of the hydrophilic organic compound and forms fine irregularities on the surface of the hydrophilic coating film, the hydrophilic coating film has excellent hydrophilicity due to the hydrophilic organic compound and the irregularities, the hydrophilic organic compound does not peel off or disappear early from the hydrophilic coating film due to stress from a use environment, the hydrophilic organic compound exists in the hydrophilic coating film for a long period, decreases in hydrophilicity and antifouling property in the hydrophilic coating film can be prevented, and the hydrophilic function and the antifouling function by the hydrophilic organic compound can be maintained for a long period.

Since the hydrophilic coating liquid according to the present invention is formed of an inorganic-based coating liquid that makes an inorganic-based porous coating film having a large number of voids, and an organic-based coating liquid that includes a betaine polymer having a cationic site and an anionic site in the same molecule and makes a hydrophilic organic compound covering the inorganic-based porous coating film in a state in which the hydrophilic organic compound has penetrated into the voids of the inorganic-based porous coating film, by including the hydrophilic organic compound having excellent hydrophilicity and antifouling property, a hydrophilic coating film in which a contact angle with respect to a film surface is small and a contact area of water with respect to the film surface can be increased can be made, and a hydrophilic coating film capable of readily washing off adhering soil with water can be made. In the hydrophilic coating liquid, because the hydrophilic organic compound penetrates into the large number of nanosized fine voids of the inorganic-based porous coating film and the hydrophilic organic compound (hydrophilic organic film) bonds to the voids of the inorganic-based porous coating film, a hydrophilic coating film having excellent strength can be made, and the hydrophilic organic compound does not peel off or disappear early from the hydrophilic coating film due to stress from a use environment, so that a hydrophilic coating film capable of preventing decreases in hydrophilicity and antifouling property in the hydrophilic coating film can be made, and a hydrophilic coating film capable of maintaining the hydrophilic function and the antifouling function by the hydrophilic organic compound for a long period can be made.

In the hydrophilic coating liquid, since the proportion, in the hydrophilic organic compound, of the betaine polymer having a cationic site and an anionic site in the same molecule is 20% or more, excellent hydrophilicity of the betaine polymer can be sufficiently utilized, the hydrophilic organic compound exhibits excellent hydrophilicity and antifouling property, the contact angle of water with respect to the film surface can be reliably reduced, the contact area of water with respect to the film surface can be reliably increased, and, when the hydrophilic coating film is washed with water, water contacts a wide area of the film surface of the hydrophilic coating film, so that a hydrophilic coating film capable of readily washing off soil adhering to the hydrophilic coating film with water can be made.

In the hydrophilic coating liquid, in a case where the inorganic-based coating liquid includes inorganic-based fine particles of silicon dioxide (SiO₂) and the solid content concentration of the inorganic-based fine particles of silicon dioxide in the inorganic-based coating liquid is 0.3 to 50 wt%, the hydrophilic organic compound that has penetrated into the large number of nanosized fine voids of the inorganic-based porous coating film can be readily bonded to voids including silicon dioxide, and a hydrophilic coating film capable of firmly bonding the hydrophilic organic compound to the voids of the inorganic-based porous coating film can be formed. In the hydrophilic coating liquid, in a case where the inorganic-based coating liquid includes inorganic-based fine particles of aluminum oxide (Al₂O₃) and the solid content concentration of the inorganic-based fine particles of aluminum oxide in the inorganic-based coating liquid is 0.3 to 50 wt%, a hydrophilic coating film capable of firmly bonding the hydrophilic organic compound that has penetrated into the large number of nanosized fine voids of the inorganic-based porous coating film to voids including aluminum oxide can be made, and salts such as magnesium, calcium, sodium, and silicon become less likely to adhere to the hydrophilic coating film due to the aluminum oxide, so that a hydrophilic coating film capable of preventing soil on the hydrophilic coating film due to adhesion of salts such as magnesium, calcium, sodium, and silicon to the hydrophilic coating film can be formed. In the hydrophilic coating liquid, in a case where the inorganic-based coating liquid includes inorganic-based fine particles of zirconium oxide (ZrO₂) and the solid content concentration of the inorganic-based fine particles of zirconium oxide in the inorganic-based coating liquid is 0.3 to 50 wt%, an inorganic-based porous coating film having increased hardness can be made, and a hydrophilic coating film capable of increasing rigidity can be formed. In the hydrophilic coating liquid, in a case where the inorganic-based coating liquid includes inorganic-based fine particles of titanium oxide (TiO₂) and the solid content concentration of the inorganic-based fine particles of titanium oxide in the inorganic-based coating liquid is 0.3 to 50 wt%, light and water contact the inorganic-based fine particles of titanium oxide, whereby the surface of the hydrophilic coating film is covered with hydrophilic groups, and a hydrophilic coating film capable of exhibiting a self-cleaning effect can be formed. In the hydrophilic coating liquid, in a case where the inorganic-based coating liquid includes inorganic-based fine particles of cerium oxide (CeO₂) and the solid content concentration of the inorganic-based fine particles of cerium oxide in the inorganic-based coating liquid is 0.3 to 50 wt%, hardness of the inorganic-based porous coating film can be increased, rigidity of the hydrophilic coating film can be increased, and a hydrophilic coating film having an ultraviolet absorbing effect in the hydrophilic coating film can be formed.

Since, in the hydrophilic coating liquid, the average particle diameter of the inorganic-based fine particles included in the inorganic-based coating liquid is 1 µm or less, an inorganic nanoporous structure by the inorganic-based porous coating film is formed, the hydrophilic organic compound penetrates into the large number of nanosized fine voids of the inorganic nanoporous structure, and the hydrophilic organic compound (hydrophilic organic film) bonds to the voids of the inorganic-based porous coating film, a hydrophilic coating film having excellent strength can be made, and the hydrophilic organic compound does not peel off or disappear early from the hydrophilic coating film due to stress from a use environment, so that a hydrophilic coating film capable of preventing decreases in hydrophilicity and antifouling property in the hydrophilic coating film can be made, and a hydrophilic coating film capable of maintaining the hydrophilic function and the antifouling function by the hydrophilic organic compound for a long period can be made. The hydrophilic coating liquid can be bonded to the inorganic-based fine particles by covalent bonds, and hydrogen bonds, ionic bonds, hydrogen bonds, van der Waals bonds, and the like can also be utilized. In particular, by impregnating a betaine polymer into nanosized spaces, binding can be strengthened, and early peeling or disappearance of the hydrophilic organic compound from the hydrophilic coating film can be prevented.

Since, in the hydrophilic coating liquid, the content of the hydrophilic organic compound in the organic-based coating liquid is in a range of 0.1 to 20 wt% with respect to the total weight of the organic-based coating liquid, excellent hydrophilicity and antifouling property of the hydrophilic organic compound including the betaine polymer can be sufficiently utilized, a hydrophilic coating film having excellent hydrophilicity and antifouling property can be made, a hydrophilic coating film in which the contact angle with respect to the film surface is small and the contact area of water with respect to the film surface can be increased can be made, and a hydrophilic coating film capable of readily washing off adhering soil with water can be made.

According to the method for forming a hydrophilic coating film according to the present invention, since, in the inorganic-based coating film formation step, the inorganic-based coating liquid that makes the inorganic-based porous coating film is used, the inorganic-based porous coating film having an inorganic nanoporous structure having a large number of nanosized fine voids is formed by a sol-gel method, and, in the hydrophilic organic compound formation step, the organic-based coating liquid that makes the hydrophilic organic compound including a betaine polymer having a cationic site and an anionic site in the same molecule is used, and the hydrophilic organic compound is formed on the surface of the substrate in a state in which the organic-based coating liquid has penetrated into the large number of fine voids of the inorganic-based porous coating film, a hydrophilic coating film having excellent hydrophilicity and antifouling property, in which the contact angle with respect to the film surface is small and the contact area of water with respect to the film surface can be increased, can be made, and a hydrophilic coating film capable of readily washing off adhering soil with water can be made. In the method for forming a hydrophilic coating film, in the hydrophilic organic compound formation step, the hydrophilic organic compound penetrates into the large number of nanosized fine voids of the inorganic-based porous coating film, and the hydrophilic organic compound (hydrophilic organic film) bonds to the voids of the inorganic-based coating film, whereby a hydrophilic coating film having excellent strength can be made, and the hydrophilic organic compound does not peel off or disappear early from the hydrophilic coating film due to stress from a use environment, so that a hydrophilic coating film capable of preventing decreases in hydrophilicity and antifouling property in the hydrophilic coating film can be made, and a hydrophilic coating film capable of maintaining the hydrophilic function and the antifouling function by the hydrophilic organic compound for a long period can be made. The hydrophilic coating liquid can be bonded to the inorganic-based fine particles by covalent bonds, and hydrogen bonds, ionic bonds, hydrogen bonds, van der Waals bonds, and the like can also be utilized. In particular, by impregnating a betaine polymer into nanosized spaces, binding can be strengthened, and a hydrophilic coating film capable of preventing early peeling or disappearance of the hydrophilic organic compound from the hydrophilic coating film can be made.

In the method for forming a hydrophilic coating film, since the inorganic-based porous coating film having an inorganic nanoporous structure is formed by a sol-gel method using at least one of silica sol, alumina sol, zirconia sol, titania sol, and ceria sol in the inorganic-based porous coating film formation step, the inorganic-based porous coating film having a large number of nanosized fine voids can be reliably formed on the surface of the substrate, a hydrophilic coating film having excellent hydrophilicity and antifouling property, in which the contact angle with respect to the film surface is small and the contact area of water with respect to the film surface can be increased, can be made, and a hydrophilic coating film capable of readily washing off adhering soil with water can be made. In the method for forming a hydrophilic coating film, in the hydrophilic organic compound formation step, the hydrophilic organic compound penetrates into the large number of nanosized fine voids of the inorganic-based porous coating film, and the hydrophilic organic compound (hydrophilic organic film) bonds to the voids of the inorganic-based porous coating film, whereby a hydrophilic coating film having excellent strength can be made, and the hydrophilic organic compound does not peel off or disappear early from the hydrophilic coating film due to stress from a use environment, so that a hydrophilic coating film capable of preventing decreases in hydrophilicity and antifouling property in the hydrophilic coating film can be made, and a hydrophilic coating film capable of maintaining the hydrophilic function and the antifouling function by the hydrophilic organic compound for a long period can be made.

In the method for forming a hydrophilic coating film, in the hydrophilic organic compound formation step, the inorganic-based porous coating film is covered with the organic-based coating liquid so that the inorganic-based porous coating film is not exposed from the surface of the hydrophilic organic compound, and the inorganic-based porous coating film is buried in the hydrophilic organic compound when the hydrophilic coating film is formed, whereby, in the hydrophilic coating film, the inorganic-based porous coating film is not exposed from the surface of the hydrophilic organic compound and the inorganic-based porous coating film is buried in the hydrophilic organic compound, so that a hydrophilic coating film having excellent hydrophilicity due to the hydrophilic organic compound covering the inorganic-based porous coating film can be made, the hydrophilic organic compound exists in the hydrophilic coating film for a long period, the hydrophilic organic compound does not peel off or disappear early from the hydrophilic coating film due to stress from a use environment, a hydrophilic coating film capable of preventing decreases in hydrophilicity and antifouling property in the hydrophilic coating film can be made, and a hydrophilic coating film capable of maintaining the hydrophilic function and the antifouling function by the hydrophilic organic compound for a long period can be made.

In the method for forming a hydrophilic coating film, in the hydrophilic organic compound formation step, the inorganic-based coating liquid is coated on the surface of the substrate in a state in which the inorganic-based coating liquid is positioned slightly below the surface of the inorganic-based porous coating film so that the inorganic-based porous coating film is exposed upward from the uppermost layer of the hydrophilic organic compound, and, when the hydrophilic coating film is formed, the inorganic-based porous coating film is exposed upward from the uppermost layer of the hydrophilic organic compound, and a portion of the inorganic-based porous coating film exposed upward from the uppermost layer of the hydrophilic organic compound is coated with an ultrathin film of the hydrophilic organic compound and forms fine irregularities on the surface of the hydrophilic coating film, so that a hydrophilic coating film having excellent hydrophilicity due to the hydrophilic organic compound and the formed irregularities can be made, the hydrophilic organic compound does not peel off or disappear early from the hydrophilic coating film due to stress from a use environment, the hydrophilic organic compound exists in the hydrophilic coating film for a long period, a hydrophilic coating film capable of preventing decreases in hydrophilicity and antifouling property in the hydrophilic coating film can be made, and a hydrophilic coating film capable of maintaining the hydrophilic function and the antifouling function by the hydrophilic organic compound for a long period can be made.

In the method for forming a hydrophilic coating film, in the water washing step, excess hydrophilic organic compound weakly bonded to the voids of the inorganic-based porous coating film, excluding the hydrophilic organic compound strongly bonded to the voids of the inorganic-based porous coating film among the hydrophilic organic compound, is washed away with water, whereby the hydrophilic organic compound that does not contribute to hydrophilicity is removed from the hydrophilic coating film, so that a hydrophilic coating film including the hydrophilic organic compound firmly bonded to the voids of the inorganic-based porous coating film and having excellent hydrophilicity and antifouling property can be made, a hydrophilic coating film in which the contact angle with respect to the film surface is small and the contact area of water with respect to the film surface can be increased can be made, and a hydrophilic coating film capable of readily washing off adhering soil with water can be made.

### Brief Description of Drawings

Fig. 1 is an image diagram showing one example of an inorganic-based porous coating film formed on a surface of a substrate.
Fig. 2 is an image diagram showing one example of a hydrophilic coating film formed of the inorganic-based porous coating film of Fig. 1 and a hydrophilic organic compound.
Fig. 3 is an image diagram showing another example of a hydrophilic coating film formed of the inorganic-based porous coating film of Fig. 1 and a hydrophilic organic compound.
Fig. 4 is an image diagram showing another example of an inorganic-based porous coating film formed on a surface of a substrate.
Fig. 5 is an image diagram showing another example of a hydrophilic coating film formed of the inorganic-based porous coating film of Fig. 4 and a hydrophilic organic compound.
Fig. 6 is an image diagram showing another example of a hydrophilic coating film formed of the inorganic-based porous coating film of Fig. 4 and a hydrophilic organic compound.
Fig. 7 is a flow diagram of a hydrophilic coating film formation method for making a hydrophilic coating film.
Fig. 8 is a diagram showing a contact angle of a water droplet dropped onto the hydrophilic coating film of Fig. 2.
Fig. 9 is a diagram showing a contact angle of a water droplet dropped onto the hydrophilic coating film of Fig. 3.
Fig. 10 is a diagram showing a contact angle of a water droplet dropped onto the hydrophilic coating film of Fig. 5.
Fig. 11 is a diagram showing a contact angle of a water droplet dropped onto the hydrophilic coating film of Fig. 6.
Fig. 12 is a diagram showing Examples 1 to 4 of hydrophilic coating films.
Fig. 13 is a diagram showing Examples 5 to 8 of hydrophilic coating films.
Fig. 14 is a diagram showing Comparative Examples 1 to 4 of hydrophilic coating films.
Fig. 15 is a diagram showing Comparative Examples 5 to 8 of hydrophilic coating films.

### Description of Embodiments

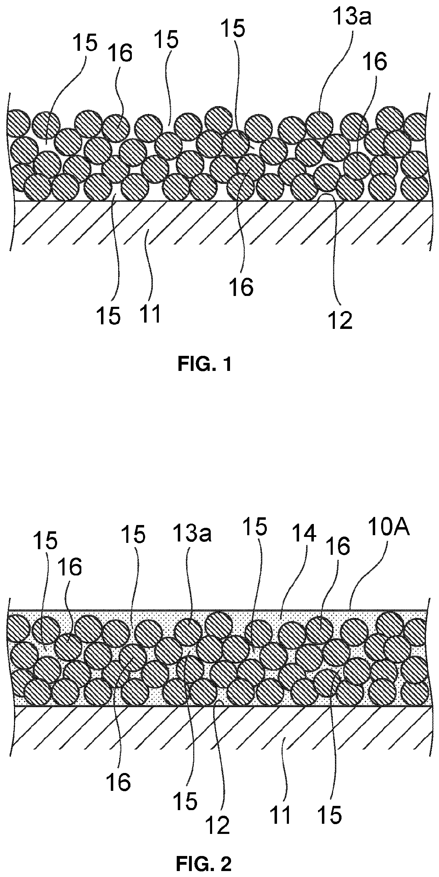

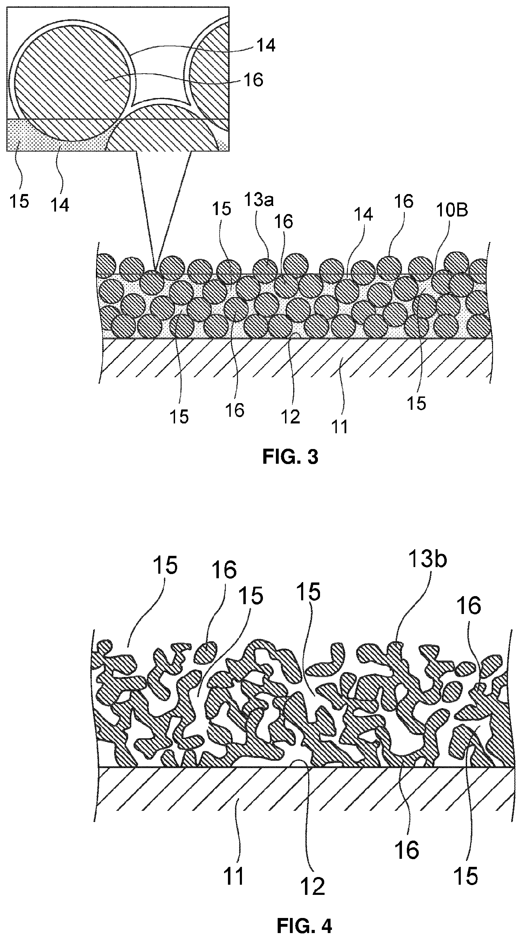

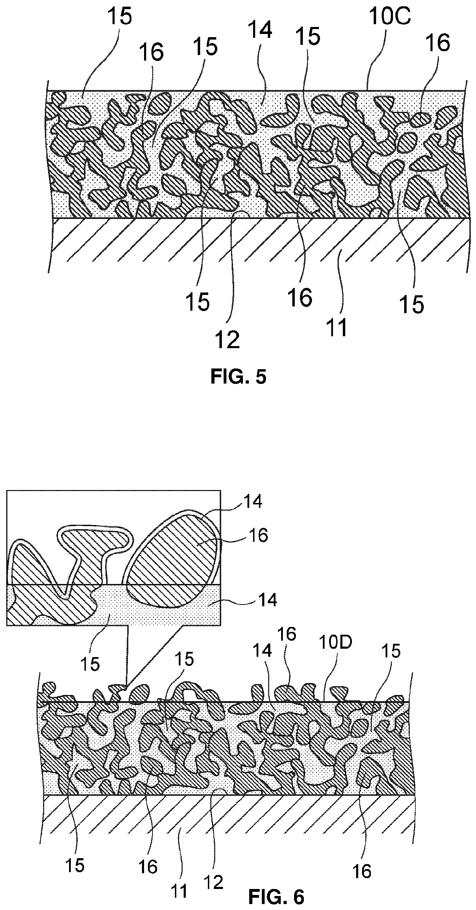

With reference to the accompanying drawings, details of a hydrophilic coating film, a hydrophilic coating liquid, and a method for forming a hydrophilic coating film according to the present invention are described as follows. Fig. 1 is an image diagram showing one example of an inorganic-based porous coating film 13a formed on a surface 12 of a substrate 11, and Fig. 2 is an image diagram showing one example of a hydrophilic coating film 10A formed of the inorganic-based porous coating film 13a of Fig. 1 and a hydrophilic organic compound 14. Fig. 3 is an image diagram showing another example of a hydrophilic coating film 10B formed of the inorganic-based porous coating film 13a of Fig. 1 and the hydrophilic organic compound 14, and Fig. 4 is an image diagram showing another example of an inorganic-based porous coating film 13b formed on the surface 12 of the substrate 11. Further, Fig. 5 is an image diagram showing another example of a hydrophilic coating film 10C formed of the inorganic-based porous coating film 13b of Fig. 4 and the hydrophilic organic compound 14, and Fig. 6 is an image diagram showing another example of a hydrophilic coating film 10D formed of the inorganic-based porous coating film 13b of Fig. 4 and the hydrophilic organic compound 14. In Figs. 1 to 6, inorganic-based fine particles 16 and voids 15 of the inorganic-based porous coating films 13a and 13b are illustrated as visible images, but, in actuality, the inorganic-based fine particles 16 and the voids 15 cannot be visually observed.

The hydrophilic coating films 10A to 10D are formed on the surface 12 (front surface, back surface) of the substrate 11 that is a coating target of the hydrophilic coating films 10A to 10D. The hydrophilic coating films 10A to 10D are formed of the inorganic-based porous coating films 13a and 13b and the hydrophilic organic compound 14, and are made by applying (coating), to the surface 12 of the substrate 11, an inorganic-based coating liquid for forming the inorganic-based porous coating films 13a and 13b, forming the inorganic-based porous coating films 13a and 13b on the surface 12 of the substrate 11, thereafter applying (coating), to the surface 12 of the substrate 11, an organic-based coating liquid for forming the hydrophilic organic compound 14, and forming the hydrophilic organic compound 14 on the surface 12 of the substrate 11.

Examples of the substrate 11 to be a coating target of the hydrophilic coating films 10A to 10D include metal (metallic molded articles), plastic (plastic molded articles and molded articles having plastic as an outermost layer), glass (glass molded articles), rubber (rubber molded articles), leather (leather molded articles), wood (wood molded articles), paper (paper molded articles, and woven or knitted fabrics using fibers (woven or knitted fabric molded articles), but the substrate 11 is not particularly limited. In addition, each molded article is not particularly limited, and includes all molded articles having predetermined shapes and made of metal, plastic, glass, rubber, leather, wood, paper, synthetic fibers, natural fibers, or woven or knitted fabrics.

Examples of the metal include iron, aluminum, duralumin, stainless steel, copper, gold, silver, titanium, nickel, and alloys. Examples of the plastic include polymethyl methacrylate, polyethylene terephthalate, polybutylene terephthalate, polyethylene naphthalate, ABS, polycarbonate, polystyrene, epoxy, unsaturated polyester, melamine, diallyl phthalate, polyimide, urethane, nylon, polyethylene, polypropylene, polyvinyl chloride, and fluororesins such as polytetrafluoroethylene resin, polychlorotrifluoroethylene resin, polyvinylidene fluoride resin, polyvinyl fluoride resin, perfluoroalkoxy fluororesin, tetrafluoroethylene-hexafluoropropylene copolymer resin, ethylene-tetrafluoroethylene copolymer resin, and ethylene-chlorotrifluoroethylene copolymer resin. Examples of the rubber include polybutadiene rubber, polyisoprene (natural rubber), styrene-butadiene rubber, nitrile rubber, EPM, EPDM, epichlorohydrin rubber, neoprene rubber, polysulfide, and butyl rubber.

As the inorganic-based coating liquid, any one of a silica sol in which nanosized inorganic-based fine particles 16 (colloidal particles) made of a plurality of fine silicon dioxide (SiO₂) particles are dispersed in a dispersion medium, an alumina sol in which nanosized inorganic-based fine particles 16 (colloidal particles) made of a plurality of fine aluminum oxide (Al₂O₃) particles are dispersed in a dispersion medium, a zirconia sol in which nanosized inorganic-based fine particles 16 (colloidal particles) made of a plurality of fine zirconium oxide (ZrO₂) particles are dispersed in a dispersion medium, a titania sol in which nanosized inorganic-based fine particles 16 (colloidal particles) made of a plurality of fine titanium oxide (TiO₂) particles are dispersed in a dispersion medium, and a ceria sol in which nanosized inorganic-based fine particles 14 (colloidal particles) made of a plurality of fine cerium oxide (CeO₂) particles are dispersed in a dispersion medium, or two or more of the sols is used. Water or an alcohol such as ethyl alcohol, n-propyl alcohol, isopropyl alcohol, or n-butanol can be used as the dispersion medium, but the dispersion medium is not limited to this method.

The silica sol is produced by a water glass method or an alkoxide method. The production methods are not limited to these production methods, and the silica sol can also be produced by another production method. In the water glass method, water is added to sodium silicate (Na₂O·SiO₂) to dilute the sodium silicate to several % and make an aqueous solution, the aqueous solution is introduced little by little into a sodium hydroxide aqueous solution heated in advance, and reaction is performed. After the reaction, boiling reflux is performed for several hours, and ultrafiltration is performed to make an alkaline silica sol. Next, after ion exchange is performed to remove impurities, a stabilizer is added for stabilization, and a silica sol (silica colloid solution) is produced.

In the alkoxide method, pure water is added to an alkyl silicate (tetraalkoxysilane) to cause a hydrolysis reaction, thereafter, after alcohol generated by the reaction is distilled off by distillation, a pH adjuster (an alkali such as tetraalkylammonium hydroxide or an acid such as hydrochloric acid) is added to adjust to a predetermined pH. After the pH is adjusted, concentration by reflux is performed to produce a silica sol (silica colloid solution).

One example of a method for producing an alumina sol is to produce an alumina sol (alumina colloid solution) by hydrothermally treating an alumina gel obtained by neutralizing a water-soluble aluminum salt with an alkali in the presence of an organic acid. Another example of a method for producing an alumina sol is to produce an alumina sol (alumina colloid solution) by hydrothermally treating, in the presence of a monovalent inorganic acid, an alumina gel obtained by a liquid-phase neutralization reaction between an acidic aluminum compound and an alkaline substance. Another example of a method for producing an alumina sol is to produce an alumina sol (alumina colloid solution) by hydrothermally treating an alumina hydrate obtained by reacting a water-soluble aluminum salt with carbonic acid or a carbonate, and then mixing the alumina hydrate with a monovalent acid.

Another example of a method for producing an alumina sol is to produce an alumina sol (alumina colloid solution) by hydrothermally treating an alumina hydrate obtained by reacting a water-soluble aluminum salt with carbonic acid or a carbonate, and then mixing the alumina hydrate with a monovalent acid. Another example of a method for producing an alumina sol is to produce an alumina sol (alumina colloid solution) by newly adding an acid to an alumina hydrate obtained by hydrolyzing an aluminum alkoxide with a dilute acid aqueous solution, and then hydrothermally treating and peptizing the alumina hydrate. Another example of a method for producing an alumina sol is to produce an alumina sol (alumina colloid solution) by treating aluminum oxide powder in an aqueous phase in the presence of an acid with a strongly acidic cation exchange resin, then removing the ion exchange resin, and cooling to room temperature. The production methods are not limited to these production methods, and the alumina sol can also be produced by another production method.

One example of a method for producing a zirconia sol is to produce a zirconia sol (zirconia colloid solution) by adding an alkali to an aqueous solution including a water-soluble zirconium salt such as zirconium oxychloride to generate zirconium hydroxide, and hydrolyzing the generated zirconium hydroxide. Another example of a method for producing a zirconia sol is to produce a zirconia sol (zirconia colloid solution) by hydrolyzing a reaction product of ammonium zirconium carbonate and a chelating agent (for example, oxyphenols, amino alcohols, oxyacids, polycarboxylic acids, oxyaldehydes, amino acids, and β-diketones). Another example of a method for producing a zirconia sol is to produce a basic zirconia sol (zirconia colloid solution) by maintaining an aqueous suspension containing zirconium hydroxide in a heated state at a temperature of 80°C or higher, making a crystallized zirconia-containing aqueous suspension in which crystallinity of generated zirconia is 80% or more, and adding a nitrogen-containing basic compound (primary amine, secondary amine, quaternary ammonium hydroxide), an alkali metal hydroxide, or an alkaline earth metal hydroxide to the crystallized zirconia-containing aqueous suspension.

Another example of a method for producing a zirconia sol is to produce a zirconia sol (zirconia colloid solution) by adding a base to a zirconium salt aqueous solution to precipitate, adding an alkaline earth metal hydroxide or an aqueous solution thereof, and heat-aging the obtained suspension at a temperature of 90 to 200°C. Another example of a method for producing a zirconia sol is to produce a zirconia sol (zirconia colloid solution) by heating an aqueous solution of a zirconium salt having a proportion of 0.5 : 1 to 4 : 1 in terms of an anion-to-metal molar ratio to 120 to 300°C, then cooling the aqueous solution to room temperature, and adjusting the pH to 2 to 6. Another example of a method for producing a zirconia sol is to produce a zirconia sol (zirconia colloid solution) by adding hydrogen peroxide in an amount of about 1/2 or more in terms of a molar ratio relative to the amount of zirconium in a solution to a zirconium salt aqueous solution having a concentration of 0.05 to 2.0 mol/liter, heating the mixture to 80 to 300°C, and further adding a base such as ammonia or treat with an ion exchange resin or the like. The production methods are not limited to these production methods, and the zirconia sol can also be produced by another production method.

One example of a method for producing a titania sol is to produce a titania sol (titania colloid solution) by peptizing titanium hydroxide precipitated by adding an alkali to an aqueous solution of a water-soluble titanium salt such as titanium tetrachloride or titanium sulfate with a strong acid such as hydrochloric acid or nitric acid. Another example of a method for producing a titania sol is to produce a titania sol (titania colloid solution) by hydrothermally treating a titanic acid gel obtained by hydrolyzing a water-soluble titanium salt with an alkali in the presence of quaternary ammonium hydroxide. Another example of a method for producing a titania sol is to produce a titania sol (titania colloid solution) by adding an organic amine such as an alkali metal hydroxide, ammonium hydroxide, methylamine, trimethylamine, ethylenediamine, or ethanolamine to a gel obtained by reacting a water-soluble titanium compound with an alkali metal hydroxide, carbonate, or ammonium compound, and hydrothermally treating the gel at 100°C or higher. The production methods are not limited to these production methods, and the titania sol can also be produced by another production method.

One example of a method for producing a ceria sol is to react a cerium salt compound such as ceric sulfate, ammonium ceric nitrate, ammonium ceric sulfate, cerous acetate, cerous chloride, ammonium cerous nitrate, cerous nitrate, or cerous nitrate with an alkali metal hydroxide such as sodium hydroxide, potassium hydroxide, or lithium hydroxide or ammonia at 10°C to 90°C to generate a gel, then add an acid such as hydrochloric acid, nitric acid, acetic acid, formic acid, lactic acid, or glycolic acid, and perform hydrothermal treatment at a temperature of 100°C or higher. The acid may be added after the hydrothermal treatment.

Another example of a method for producing a ceria sol is to disperse cerium hydroxide or hydrated cerium hydroxide in water, perform stirring, and then add HNO3 to prepare a reaction dispersion. The ceria sol can also be produced by heating the obtained reaction dispersion to about 80 to 150°C and performing heat treatment for about 6 hours. The production methods are not limited to these production methods, and the ceria sol can also be produced by another production method.

The inorganic-based coating liquid includes one type of inorganic-based fine particles 16 among silicon dioxide (SiO₂), aluminum oxide (Al₂O₃), zirconium oxide (ZrO₂), titanium oxide (TiO₂), and cerium oxide (CeO₂), or two or more types of inorganic-based fine particles 16. By applying a silica sol, alumina sol, zirconia sol, titania sol, or ceria sol to the surface 12 of the substrate 11, the inorganic-based porous coating films 13a and 13b having an inorganic nanoporous structure having a large number of nanosized fine voids 15 (gaps) shown in Fig. 1 and Fig. 4, made by a sol-gel method, are formed.

In the inorganic-based porous coating film 13a shown in Fig. 1, adjacent inorganic-based fine particles 16 among a large number of substantially spherical inorganic-based fine particles 16 are partially connected to each other, and a large number of nanosized fine voids 15 (inorganic nanoporous structure) are formed between the inorganic-based fine particles 16. In the inorganic-based porous coating film 13b shown in Fig. 4, irregular substantially columnar inorganic-based fine particles 16 are partially connected (coupled) to each other, and a large number of nanosized fine voids 15 (inorganic nanoporous structure) are formed between the inorganic-based fine particles 16.

A solid content concentration of the inorganic-based fine particles 16 (silicon dioxide (SiO₂), aluminum oxide (Al₂O₃), zirconium oxide (ZrO₂), titanium oxide (TiO₂), and cerium oxide (CeO₂)) in the inorganic-based coating liquid is in a range of 0.3 wt% or more and 50 wt% or less with respect to a total mass of the inorganic-based coating liquid. When the solid content concentration of the inorganic-based fine particles 16 of silicon dioxide (SiO₂) in the inorganic-based coating liquid is less than 0.3 wt%, the amount of silicon dioxide readily bonding to the hydrophilic organic compound 14 becomes insufficient, the hydrophilic organic compound 14 that has penetrated into the large number of fine voids 15 described later of the inorganic-based porous coating films 13a and 13b becomes less likely to bond to the voids 15 including silicon dioxide, and the hydrophilic organic compound 14 cannot be firmly bonded to the voids 15 of the inorganic-based porous coating films 13a and 13b. Since the solid content concentration of the inorganic-based fine particles 16 of silicon dioxide (SiO₂) in the inorganic-based coating liquid is in the above range, the hydrophilic organic compound 14 (hydrophilic organic film) that has penetrated into the large number of fine voids 15 of the inorganic-based porous coating films 13a and 13b readily bonds to the voids 15 including silicon dioxide, and the hydrophilic organic compound 14 can be firmly bonded to the voids 15 of the inorganic-based porous coating films 13a and 13b.

When the solid content concentration of the inorganic-based fine particles 16 of aluminum oxide (Al₂O₃) in the inorganic-based coating liquid is less than 0.3 wt%, the amount of aluminum oxide readily bonding to the hydrophilic organic compound 14 becomes insufficient, the hydrophilic organic compound 14 that has penetrated into the large number of fine voids 15 of the inorganic-based porous coating films 13a and 13b becomes less likely to bond to the voids 15 including aluminum oxide, the hydrophilic organic compound 14 cannot be firmly bonded to the voids of the inorganic-based porous coating films 13a and 13b, and a function of removing salts such as magnesium, calcium, sodium, and silicon by aluminum oxide decreases, so that soil on the hydrophilic coating films 10A to 10D due to adhesion of salts such as magnesium, calcium, sodium, and silicon cannot be prevented. Since the solid content concentration of the inorganic-based fine particles 16 of aluminum oxide (Al₂O₃) in the inorganic-based coating liquid is in the above range, the hydrophilic organic compound 14 that has penetrated into the large number of fine voids 14 of the inorganic-based porous coating films 13a and 13b can be firmly bonded to the voids 14 including aluminum oxide, and salts such as magnesium, calcium, sodium, and silicon become less likely to adhere to the hydrophilic coating films 10A to 10D due to aluminum oxide, so that soil on the hydrophilic coating films 10A to 10D due to adhesion of salts such as magnesium, calcium, sodium, and silicon to the hydrophilic coating films 10A to 10D can be prevented.

When the solid content concentration of the inorganic-based fine particles 16 of zirconium oxide (ZrO₂) in the inorganic-based coating liquid is less than 0.3 wt%, hardness of the inorganic-based porous coating films 13a and 13b cannot be increased, and rigidity of the hydrophilic coating films 10A to 10D cannot be increased. Since the solid content concentration of the inorganic-based fine particles 16 of zirconium oxide (ZrO₂) in the inorganic-based coating liquid is in the above range, hardness of the inorganic-based porous coating films 13a and 13b can be increased, and rigidity of the hydrophilic coating films 10A to 10D can be increased.

When the solid content concentration of the inorganic-based fine particles 16 of titanium oxide (TiO₂) in the inorganic-based coating liquid is less than 0.3 wt%, the amount of titanium oxide becomes insufficient, and a self-cleaning effect cannot be imparted to the hydrophilic coating films 10A to 10D. Since the solid content concentration of the inorganic-based fine particles 16 of titanium oxide (TiO2) in the inorganic-based coating liquid is in the above range, light and water contact the inorganic-based fine particles 16 of titanium oxide, whereby surfaces of the hydrophilic coating films 10A to 10D are covered with hydrophilic groups, and an excellent self-cleaning effect can be imparted to the hydrophilic coating films 10A to 10D.

When the solid content concentration of the inorganic-based fine particles 14 of cerium oxide (CeO2) in the inorganic-based coating liquid is less than 0.3 wt%, hardness of the inorganic-based porous coating films 13a and 13b cannot be increased, and rigidity of the hydrophilic coating films 10A to 10D cannot be increased. In addition, an ultraviolet absorbing function also cannot be sufficiently obtained. Since the solid content concentration of the inorganic-based fine particles 14 of cerium oxide (CeO2) in the inorganic-based coating liquid is in the above range, hardness of the inorganic-based porous coating films 13a and 13b can be increased, rigidity of the hydrophilic coating films 10A to 10D can be increased, and an ultraviolet absorbing effect of the hydrophilic coating films 10A to 10D can also be obtained.

When the solid content concentration of the inorganic-based fine particles 16 (silicon dioxide (SiO2), aluminum oxide (Al2O3), zirconium oxide (ZrO2), titanium oxide (TiO2), and cerium oxide (CeO2)) in the inorganic-based coating liquid exceeds 50 wt%, a large number of the inorganic-based fine particles 16 contact each other over a wide range, the inorganic-based fine particles 16 become dense, and the large number of fine voids 15 cannot be formed. Since the solid content concentration of the inorganic-based fine particles 16 in the inorganic-based coating liquid is in the above range, the inorganic-based porous coating films 13a and 13b having a predetermined strength and having an inorganic nanoporous structure having a large number of nanosized fine voids 15 can be formed on the coating surface 12 of the substrate 11.

An average particle diameter of the inorganic-based fine particles 16 included in the inorganic-based coating liquid is 1 µm or less. When the average particle diameter of the inorganic-based fine particles 16 exceeds 1 µm, the volume of the voids 15 becomes large, and the inorganic-based porous coating films 13a and 13b having an inorganic nanoporous structure having a large number of fine voids 15 cannot be formed on the coating surface 12 of the substrate 11. Since the average particle diameter of the inorganic-based fine particles 16 is 1 µm or less, a large number of fine inorganic-based fine particles 16 are partially connected to each other, whereby the inorganic-based porous coating films 13a and 13b having an inorganic nanoporous structure having a large number of nanosized fine voids 15 can be formed on the coating surface 12 of the substrate 11.

In the organic-based coating liquid, the hydrophilic organic compound 14 including a betaine polymer having a cationic site and an anionic site in the same molecule is dispersed and mixed in a solvent. A content of the hydrophilic organic compound 14 in the organic-based coating liquid is in a range of 0.1 wt% or more and 20 wt% or less with respect to a total weight of the organic-based coating liquid. When the content of the hydrophilic organic compound 14 in the organic-based coating liquid is less than 0.1 wt%, the content of the hydrophilic organic compound 14 in the organic-based coating liquid is small, the hydrophilic organic compound 14 made from the organic-based coating liquid cannot exhibit sufficient hydrophilicity and antifouling property, and excellent hydrophilicity and antifouling property cannot be imparted to the hydrophilic coating films 10A to 10D formed of the inorganic-based porous coating films 13a and 13b and the hydrophilic organic compound 14.

In the organic-based coating liquid, since the content of the hydrophilic organic compound 14 included in the organic-based coating liquid is in the above range, the organic-based coating liquid includes a sufficient amount of the hydrophilic organic compound 14, the hydrophilic organic compound 14 made from the organic-based coating liquid exhibits sufficient hydrophilicity and antifouling property, and excellent hydrophilicity and antifouling property can be imparted to the hydrophilic coating films 10A to 10D formed of the inorganic-based porous coating films 13a and 13b and the hydrophilic organic compound 14.

A proportion of the betaine polymer in the hydrophilic organic compound 14 is 20% or more. When the proportion of the betaine polymer in the hydrophilic organic compound 14 is less than 20%, the content of the betaine polymer in the hydrophilic organic compound 14 is small and the hydrophilic function of the betaine polymer cannot be sufficiently utilized, so that the hydrophilic organic compound 14 made from the organic-based coating liquid cannot exhibit sufficient hydrophilicity and antifouling property, and excellent hydrophilicity and antifouling property cannot be imparted to the hydrophilic coating films 10A to 10D formed of the inorganic-based porous coating films 13a and 13b and the hydrophilic organic compound 14.

In the organic-based coating liquid, since the proportion of the betaine polymer in the hydrophilic organic compound 14 is 20% or more, the organic-based coating liquid includes a sufficient amount of the betaine polymer, the hydrophilic organic compound 14 made from the organic-based coating liquid exhibits excellent hydrophilicity and antifouling property, and excellent hydrophilicity and antifouling property can be imparted to the hydrophilic coating films 10A to 10D formed of the inorganic-based porous coating films 13a and 13b and the hydrophilic organic compound 14.

As a specific example of the organic-based coating liquid, a coating liquid is used in which a polymer capable of forming a high-density polymer brush (surface graft polymer) shown by the following structural formula (1) is dispersed and mixed in a water-soluble solvent or an ester-based solvent. A structural formula of the polymer capable of forming the high-density polymer brush is shown in (Chemical Formula 1).

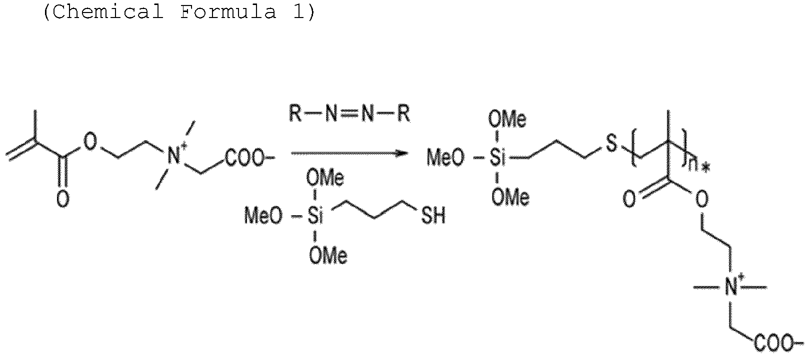

The polymer capable of forming the high-density polymer brush shown in the structural formula of (Chemical Formula 1) is a polymer brush of a carboxybetaine monomer having a silanol group at one terminal, and γ-mercaptopropyltrimethoxysilane is used as a chain transfer agent. This polymer capable of forming the high-density polymer brush can make a polymer thin film like a carpet in which polymer chains are grown.

In the organic-based coating liquid, brush fine particles and bottle brushes may also be used in addition to the polymer capable of forming the above high-density polymer brush (surface graft polymer). In addition, a betaine polymer not including a silanol group or an alkoxysilyl group in a terminal or in a polymer chain may also be used. By using a betaine polymer not including a silanol group or an alkoxysilyl group, reactions in the solution do not occur, and long-term aging changes can be suppressed. As examples of other hydrophilic organic compounds that can be used in combination with the betaine polymer of the organic-based coating liquid, a coating liquid may also be used in which a polymer capable of forming a PHEMA polymer brush shown below as another example, a PHEMA polymer, a polymer capable of forming a PPEGMA polymer brush, a PPEGMA polymer, a polymer capable of forming a PNIPAM polymer brush, a PNIPAM polymer, a polymer capable of forming a PMTAC polymer brush, a PMTAC polymer, a polymer capable of forming a PSPMK polymer brush, and a PSPMK polymer are dispersed and mixed in a water-soluble solvent or an ester-based solvent. In addition, a betaine polymer other than the betaine polymer shown in the structural formula of (Chemical Formula 1) can also be mixed, and a coating liquid in which a polymer capable of forming a PMAPS polymer brush shown as another example, a PMAPS polymer, a polymer capable of forming a PMPC polymer brush, and a PMPC polymer are dispersed and mixed may also be used. As these polymers, polymers obtained by copolymerizing a plurality of monomers may be used. A structural formula of the PHEMA polymer is shown in (Chemical Formula 2), and the PHEMA polymer may have a silanol group or an alkoxysilyl group at one terminal, or may include a silanol group or an alkoxysilyl group in a polymer chain.

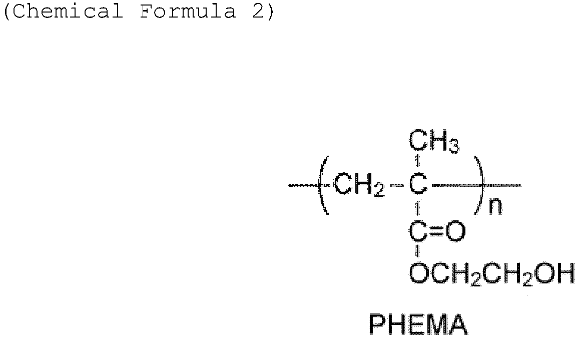

A structural formula of the PPEGMA polymer is shown in (Chemical Formula 3), and the PPEGMA polymer may have a silanol group or an alkoxysilyl group at one terminal, or may include a silanol group or an alkoxysilyl group in a polymer chain.

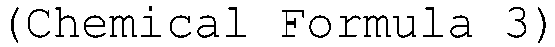

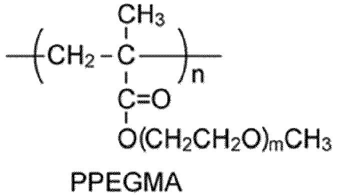

A structural formula of the PNIPAM polymer is shown in (Chemical Formula 4), and the PNIPAM polymer may have a silanol group or an alkoxysilyl group at one terminal, or may include a silanol group or an alkoxysilyl group in a polymer chain.

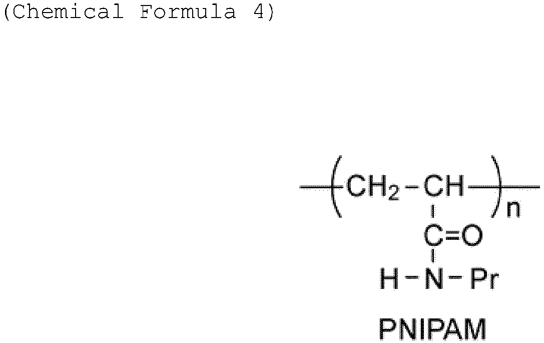

A structural formula of the PMTAC polymer is shown in (Chemical Formula 5), and the PMTAC polymer may have a silanol group or an alkoxysilyl group at one terminal, or may include a silanol group or an alkoxysilyl group in a polymer chain.

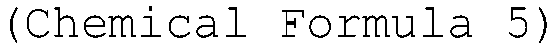

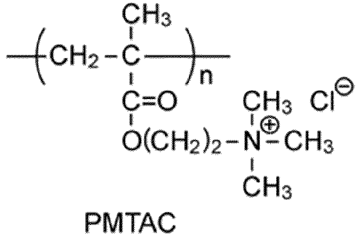

A structural formula of the PSPMK polymer is shown in (Chemical Formula 6), and the PSPMK polymer may have a silanol group or an alkoxysilyl group at one terminal, or may include a silanol group or an alkoxysilyl group in a polymer chain.

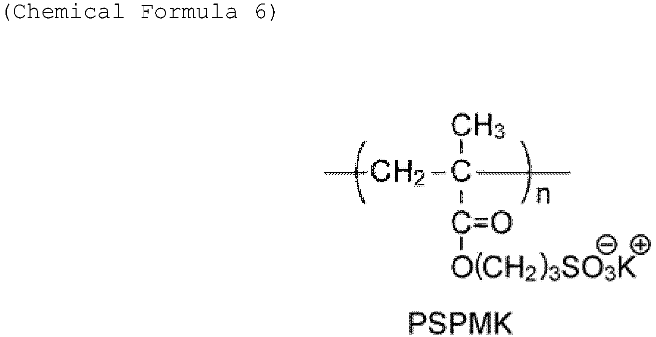

A structural formula of the PMAPS polymer is shown in (Chemical Formula 7), and the PMAPS polymer may have a silanol group or an alkoxysilyl group at one terminal, or may include a silanol group or an alkoxysilyl group in a polymer chain.

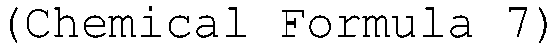

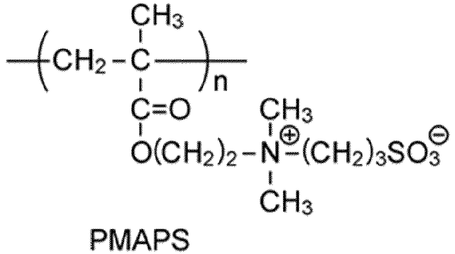

A structural formula of the PMPC polymer is shown in (Chemical Formula 8), and the PMPC polymer may have a silanol group or an alkoxysilyl group at one terminal, or may include a silanol group or an alkoxysilyl group in a polymer chain.

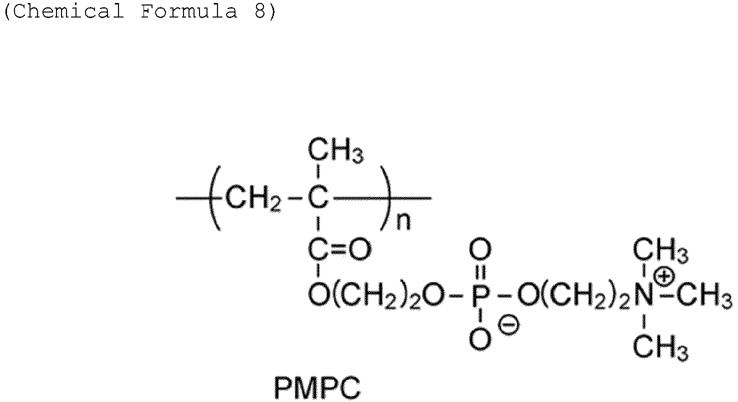

A primary alcohol-based solvent, secondary alcohol-based solvent, tertiary alcohol-based solvent, ether-based solvent, ester-based solvent, or ketone-based solvent is used as the water-soluble solvent. iso-Propanol, sec-butyl alcohol, tert-butyl alcohol, propylene glycol monomethyl ether, and the like are used as the primary, secondary, or tertiary alcohol-based solvent. Tetrahydrofuran, 1,4-dioxane, 1,3-dioxolane, triethylene glycol butyl methyl ether, diethylene glycol dimethyl ether, diethylene glycol diethyl ether, diethylene glycol ethyl methyl ether, diethylene glycol isopropyl methyl ether, ethylene glycol diethyl ether, ethylene glycol dimethyl ether, propylene glycol dimethyl ether, tetraethylene glycol dimethyl ether, triethylene glycol dimethyl ether, tripropylene glycol dimethyl ether, diethylene glycol butyl methyl ether, diethylene glycol dibutyl ether, dipropylene glycol dimethyl ether, and the like are used as the ether-based solvent.

Methyl acetate, ethyl acetate, ethylene glycol monomethyl acetate, ethylene glycol monoethyl acetate, propylene glycol monomethyl ether acetate, diethylene glycol monomethyl ether acetate, diethylene glycol monoethyl ether acetate, diethylene glycol monobutyl ether acetate, propylene glycol monomethyl ether propionate, γ-butyrolactone, and the like are used as the ester-based solvent. Examples of the ketone-based solvent include acetone, methyl ethyl ketone, methyl isobutyl ketone, diisopropyl ketone, and cyclohexanone. Dimethyl sulfoxide, N,N-dimethylformamide, N-methylpyrrolidone, and the like are used as an aprotic solvent.

As another example of the betaine polymer constituting the polymer, the following betaine polymers may also be used. As one example of the betaine polymer, there is a polymer containing 2-methacryloyloxyethyl phosphorylcholine as a component. A structural formula of the polymer is shown in (Chemical Formula 9), and the polymer may have a silanol group or an alkoxysilyl group at one terminal, or may include a silanol group or an alkoxysilyl group in a polymer chain.

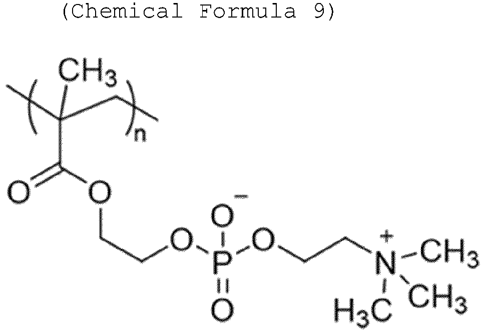

As another example of the betaine polymer constituting the polymer, there is a polycarboxybetaine polymer. A structural formula of the polycarboxybetaine polymer is shown in (Chemical Formula 10), and the polycarboxybetaine polymer may have a silanol group or an alkoxysilyl group at one terminal, or may include a silanol group or an alkoxysilyl group in a polymer chain.

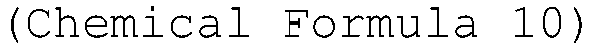

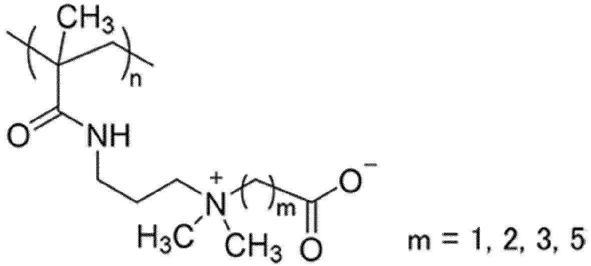

Examples of the monomer constituting the betaine polymer include a sulfobetaine monomer, a carboxybetaine monomer, a phosphobetaine monomer, a dimethylamine oxide monomer, and dimethylsulfoniopropionate. A general formula of the sulfobetaine monomer is shown in (Chemical Formula 11), and specific structural formulas of the sulfobetaine monomer are shown in (Chemical Formula 12) to (Chemical Formula 18).

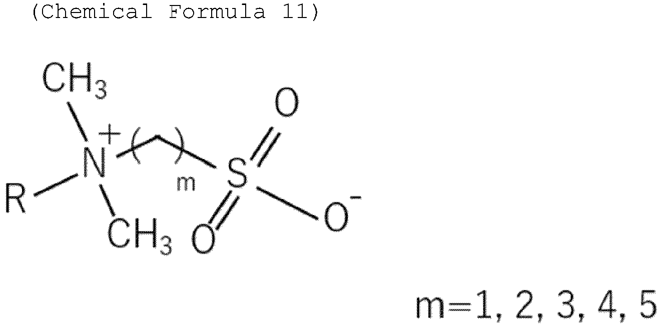

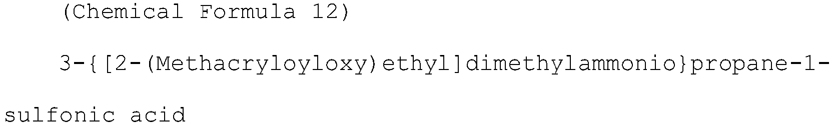

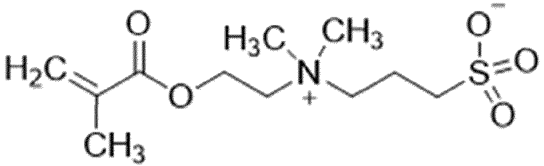

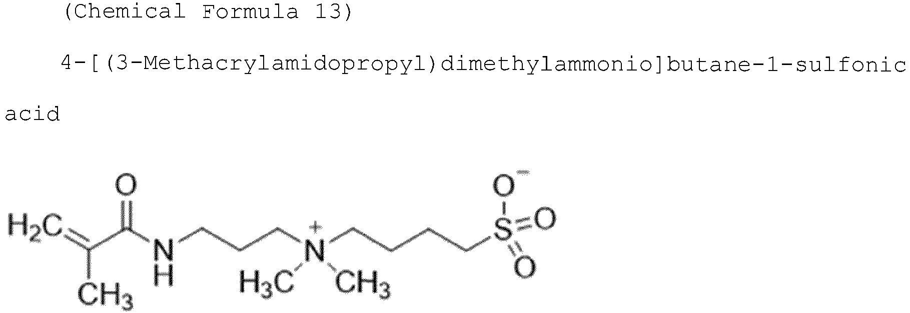

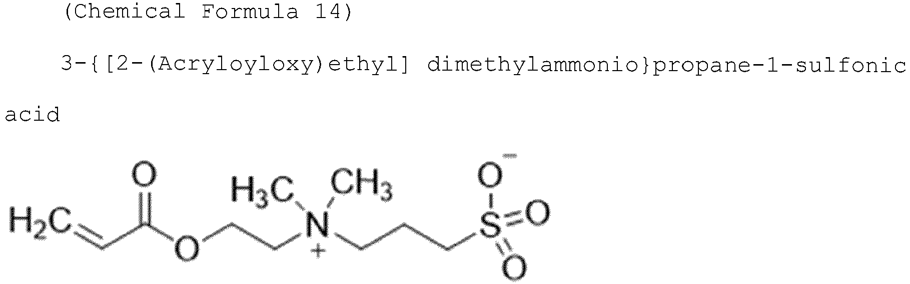

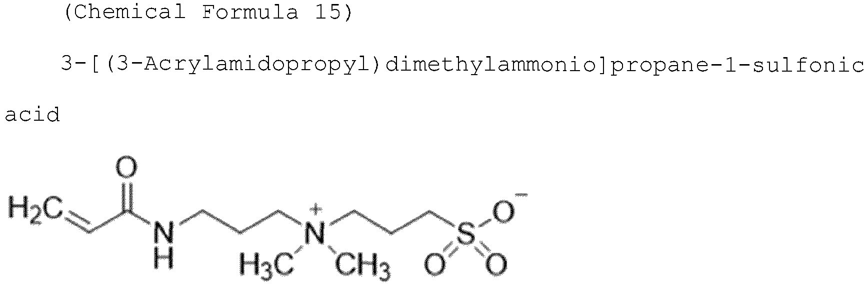

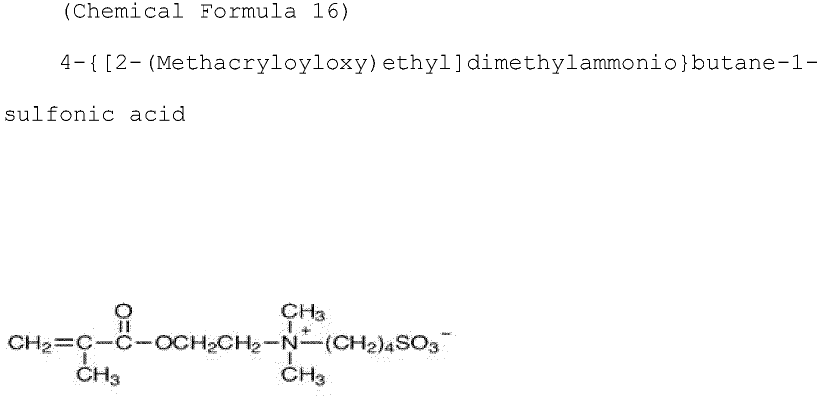

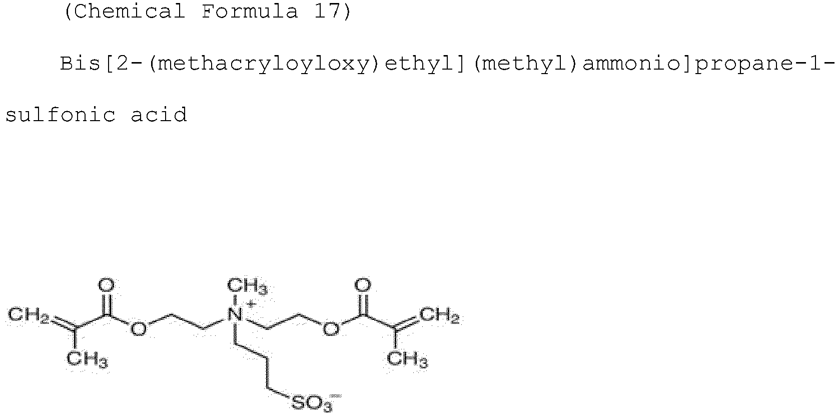

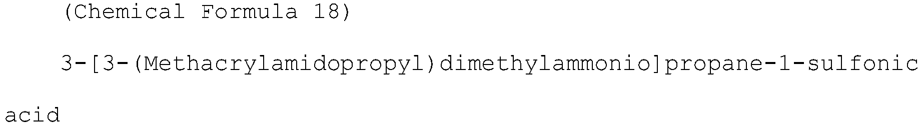

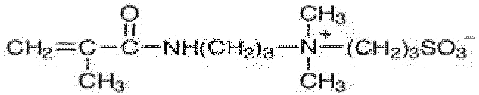

A general formula of the carboxybetaine monomer is shown in (Chemical Formula 19), and specific structural formulas of the carboxybetaine monomer are shown in (Chemical Formula 20) to (Chemical Formula 22). 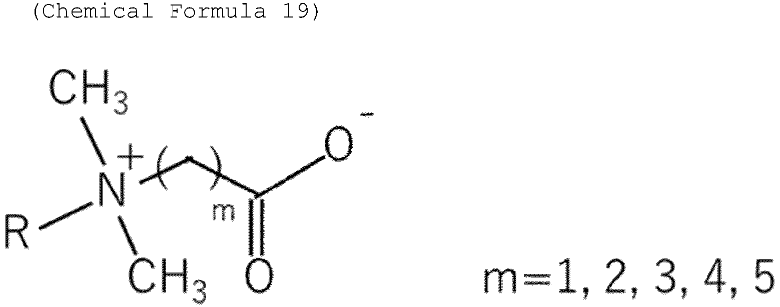 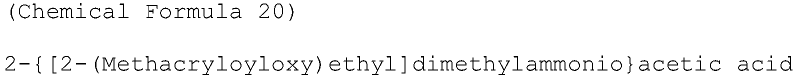 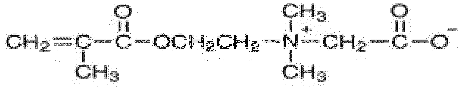 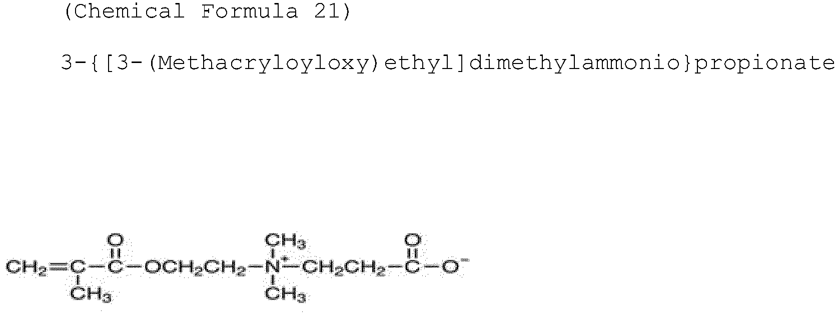 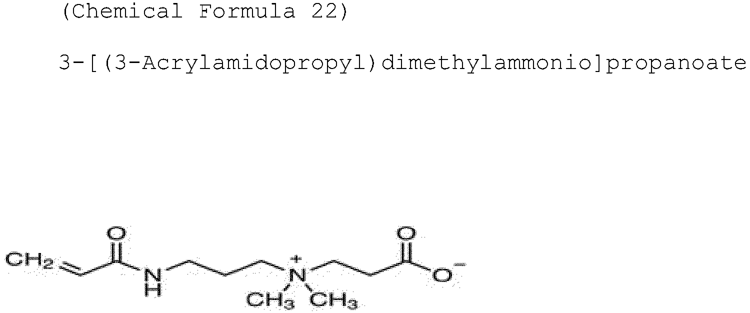 A general formula of the phosphobetaine monomer is shown in (Chemical Formula 23), and a specific structural formula of the phosphobetaine monomer is shown in (Chemical Formula 24).

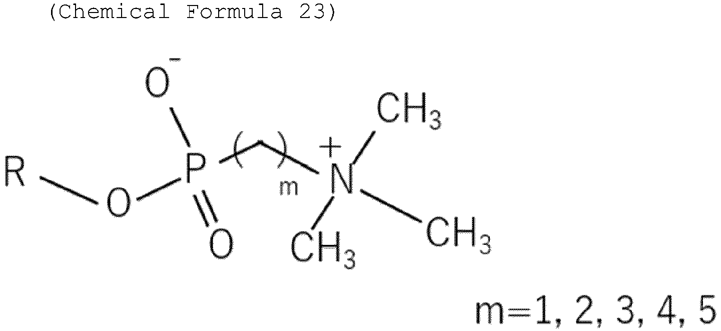

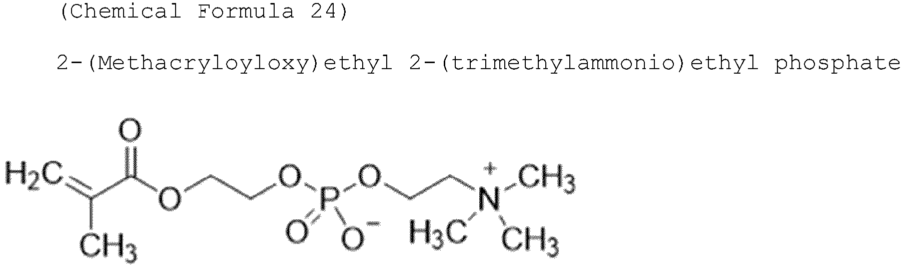

A structural formula of dimethylamine oxide is shown in (Chemical Formula 25). 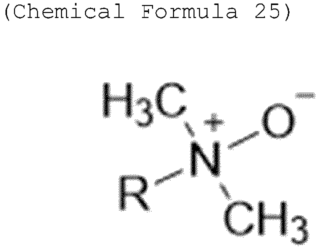 A structural formula of methylsulfoniocarboxylate is shown in (Chemical Formula 26).

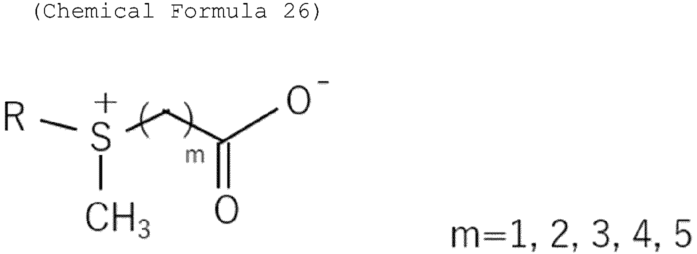

Since the inorganic-based coating liquid forming the hydrophilic coating liquid includes inorganic-based fine particles 16 of at least one type among silicon dioxide (SiO₂), aluminum oxide (Al₂O₃), zirconium oxide (ZrO₂), titanium oxide (TiO₂), and cerium oxide (CeO₂), and a solid content concentration of the inorganic-based fine particles 16 in the inorganic-based coating liquid is 0.3 to 50 wt%, the inorganic-based fine particles 16 can make the inorganic-based porous coating films 13a and 13b having sufficient strength and in which a large number of fine voids 15 are formed, and can make the hydrophilic coating films 10A to 10D firmly bonded to the voids 15.

In a case where the inorganic-based coating liquid forming the hydrophilic coating liquid includes the inorganic-based fine particles 16 of silicon dioxide (SiO₂), by utilizing ease of bonding between the hydrophilic organic compound 14 and silicon dioxide, the hydrophilic organic compound 14 that has penetrated into a large number of fine voids 14 of the inorganic-based porous coating films 13a and 13b readily bonds to the voids 15 including silicon dioxide, and the hydrophilic coating films 10A to 10D in which the hydrophilic organic compound 14 is firmly bonded to the voids 15 of the inorganic-based porous coating films 13a and 13b can be made.

In a case where the inorganic-based coating liquid forming the hydrophilic coating liquid includes the inorganic-based fine particles 16 of aluminum oxide (Al₂O₃), by utilizing ease of bonding between the hydrophilic organic compound 14 and aluminum oxide, the hydrophilic coating films 10A to 10D in which the hydrophilic organic compound 14 that has penetrated into a large number of fine voids 15 of the inorganic-based porous coating films 13a and 13b is firmly bonded to the voids 15 of the inorganic-based porous coating films 13a and 13b including aluminum oxide can be made, and salts such as magnesium, calcium, sodium, and silicon become less likely to adhere to the hydrophilic coating films 10A to 10D due to aluminum oxide, so that the hydrophilic coating films 10A to 10D capable of preventing soil caused by adhesion of salts such as magnesium, calcium, sodium, and silicon to the hydrophilic coating films 10A to 10D can be made.

In a case where the inorganic-based coating liquid forming the hydrophilic coating liquid includes the inorganic-based fine particles 16 of zirconium oxide (ZrO₂), hardness can be increased by zirconium oxide, and the hydrophilic coating films 10A to 10D having increased rigidity can be made. In a case where the inorganic-based coating liquid forming the hydrophilic coating liquid includes the inorganic-based fine particles 16 of titanium oxide (TiO₂), light and water contact the inorganic-based fine particles 16 of titanium oxide, whereby a surface is covered with hydrophilic groups, and the hydrophilic coating films 10A to 10D having an excellent self-cleaning effect can be made. In a case where the inorganic-based coating liquid forming the hydrophilic coating liquid includes the inorganic-based fine particles 14 of cerium oxide (CeO₂), hardness can be increased by cerium oxide, ultraviolet absorbing ability can also be provided, and the hydrophilic coating films 10A to 10D having increased rigidity and also having ultraviolet absorbing ability can be made.

Since the hydrophilic coating liquid is formed of the inorganic-based coating liquid that makes the inorganic-based porous coating films 13a and 13b having a large number of voids 15, and the organic-based coating liquid that includes a betaine polymer (polymer brush) having a cationic site and an anionic site in the same molecule and makes the hydrophilic organic compound 14 covering the inorganic-based porous coating films 13a and 13b in a state in which the hydrophilic organic compound 14 has penetrated into the voids 15 of the inorganic-based porous coating films 13a and 13b, by including the hydrophilic organic compound 14 having excellent hydrophilicity and antifouling property, the hydrophilic coating films 10A to 10D in which a contact angle with respect to a film surface is small and a contact area of water with respect to the film surface can be increased can be made, and the hydrophilic coating films 10A to 10D capable of readily washing off adhering soil with water can be made.

In the hydrophilic coating liquid, the hydrophilic organic compound 14 forming the hydrophilic coating liquid penetrates into the large number of nanosized fine voids 15 of the inorganic-based porous coating films 13a and 13b, and the hydrophilic organic compound 14 (hydrophilic organic film) bonds (joins) to the voids 15 (inorganic-based fine particles 14) of the inorganic-based porous coating films 13a and 13b and the surface 12 of the substrate 11, whereby the hydrophilic coating films 10A to 10D having excellent strength can be made, and the hydrophilic organic compound 14 does not peel off or disappear early from the hydrophilic coating films 10A to 10D due to stress from a use environment, so that the hydrophilic coating films 10A to 10D capable of preventing decreases in hydrophilicity and antifouling property can be made, and the hydrophilic coating films 10A to 10D capable of maintaining the hydrophilic function and the antifouling function by the hydrophilic organic compound 14 for a long period can be made.

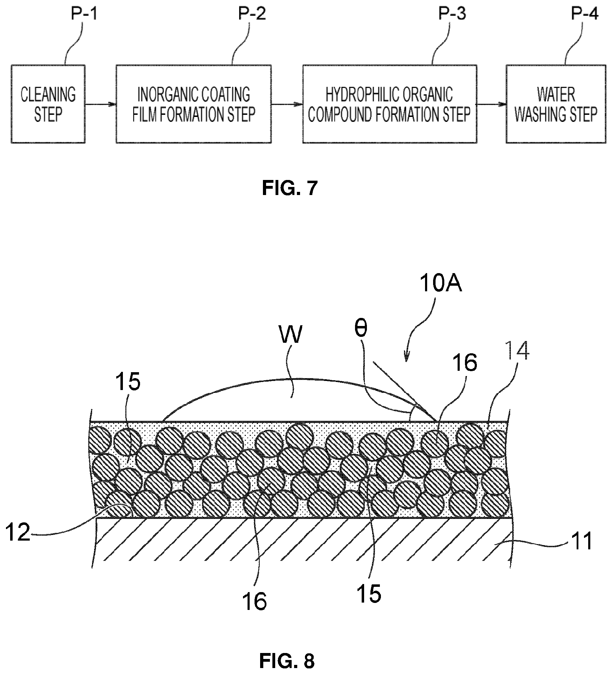

Fig. 7 is a flow diagram of a hydrophilic coating film formation method for making the hydrophilic coating films 10A to 10D. One example of the hydrophilic coating film formation method for making the hydrophilic coating films 10A to 10D is described below based on Fig. 7. The hydrophilic coating film formation method makes the hydrophilic coating films 10A to 10D formed of the inorganic-based porous coating films 13a and 13b having a large number of fine voids 15 and the hydrophilic organic compound 14.

The hydrophilic coating film formation method includes a cleaning step (P-1), an inorganic-based porous coating film formation step (P-2), a hydrophilic organic compound formation step (P-3), and a water washing step (P-4), and forms the hydrophilic coating films 10A to 10D on the coating surface 12 of the substrate 11 by carrying out these steps (P-1) to (P-4). In the cleaning step (P-1), after performing a cleaning treatment of blowing away dust on the coating surface 12 of the substrate 11 by using air injection means such as an air gun, the coating surface 12 of the substrate 11 is cleaned using an alkaline detergent. After cleaning with the alkaline detergent, the coating surface 12 of the substrate 11 is cleaned using an acidic liquid. The alkaline detergent may be any alkaline detergent and is not limited to a specific detergent, and the acidic liquid may be any acidic liquid and is not limited to a specific liquid. In the cleaning step, by cleaning the coating surface 12 of the substrate 11 using the alkaline detergent and cleaning the coating surface 12 of the substrate 11 using the acidic liquid, soil such as dust, oil, and organic matter adhering to the coating surface 12 of the substrate 11 is reliably removed.

In the inorganic-based porous coating film formation step (P-2), the inorganic-based coating liquid including the inorganic-based fine particles 16 is coated (applied) on the cleaned surface 12 of the substrate 11, and the inorganic-based porous coating films 13a and 13b in which an inorganic nanoporous structure having a large number of nanosized fine voids 15 has been made by a sol-gel method using at least one of silica sol, alumina sol, zirconia sol, titania sol, and ceria sol are formed on the coating surface 12 of the substrate 11. Before the inorganic-based porous coating film formation step (P-2), an inorganic-based coating liquid preparation step of dissolving at least one of silica sol, alumina sol, zirconia sol, titania sol, and ceria sol in an aqueous solution (for example, pure water) and making the inorganic-based coating liquid is carried out.

As a coating method for coating the inorganic-based coating liquid on the coating surface 12 of the substrate 11, any coating method among fabric coating (wiping coat method) in which the inorganic-based coating liquid is impregnated into a fabric made of microfiber or nonwoven fabric and the inorganic-based coating liquid is coated on the coating surface 12 of the substrate 11 with the fabric, a spray coater (spray coat method) in which the inorganic-based coating liquid is coated on the coating surface 12 of the substrate 11 using a spray can or a spray gun containing the inorganic-based coating liquid, brush coating in which the inorganic-based coating liquid is coated on the coating surface 12 of the substrate 11 using a brush, a roll coater in which the inorganic-based coating liquid is coated on the coating surface 12 of the substrate 11 using a roll coated with the inorganic-based coating liquid, and a spin coater (spin coat method) in which, after the inorganic-based coating liquid is placed on the coating surface 12 of the substrate 11, the inorganic-based coating liquid is dispersed on the coating surface 12 of the substrate 11 by utilizing centrifugal force generated by rotating the substrate 11 at high speed can be used.

In the inorganic-based porous coating film formation step (P-2), as described above, the above-described inorganic-based coating liquid including the inorganic-based fine particles 16 of at least one type among silicon dioxide (SiO₂), aluminum oxide (Al₂O₃), zirconium oxide (ZrO₂), titanium oxide (TiO₂), and cerium oxide (CeO₂) is used. In the inorganic-based porous coating film formation step (P-2), after the inorganic-based coating liquid is coated on the coating surface 12 of the substrate 11, the inorganic-based coating liquid is dried. In the inorganic-based porous coating film formation step (P-2), the dispersion medium (water or alcohol) included in the inorganic-based coating liquid volatilizes, and the inorganic-based fine particles 16 are partially connected to each other. The inorganic-based porous coating films 13a and 13b formed in the inorganic-based porous coating film formation step (P-2) have an inorganic nanoporous structure having a large number of nanosized fine voids 15 having a porosity in a range of 20% or more and 70% or less, as shown in Fig. 1 and Fig. 4.

In the hydrophilic organic compound formation step (P-3), after the inorganic-based porous coating films 13a and 13b having an inorganic nanoporous structure having a large number of fine voids 15 are formed on the coating surface 12 of the substrate 11, the organic-based coating liquid is coated (applied) on the coating surface 12 of the substrate 11 from above the inorganic-based porous coating films 13a and 13b, and the hydrophilic organic compound 14 is formed on the coating surface 12 of the substrate 11.

As a coating method for coating the organic-based coating liquid on the inorganic-based porous coating films 13a and 13b (surface 12 of the substrate 11), any coating method among fabric coating in which the organic-based coating liquid is impregnated into a fabric made of microfiber or nonwoven fabric and the organic-based coating liquid is coated on the surface 12 of the substrate 11 with the fabric, a spray coater in which the organic-based coating liquid is coated on the surface 12 of the substrate 11 using a spray can or a spray gun containing the organic-based coating liquid, brush coating in which the organic-based coating liquid is coated on the surface 12 of the substrate 11 using a brush, a roll coater in which the organic-based coating liquid is coated on the surface 12 of the substrate 11 using a roll coated with the organic-based coating liquid, and a spin coater in which, after the organic-based coating liquid is placed on the surface 12 of the substrate 11, the organic-based coating liquid is dispersed on the surface 12 of the substrate 11 by utilizing centrifugal force generated by rotating the substrate 11 at high speed is used.

In the hydrophilic organic compound formation step (P-3), as described above, the organic-based coating liquid in which the hydrophilic organic compound 14 including the betaine polymer having a cationic site and an anionic site in the same molecule is dispersed and mixed is used. In the hydrophilic organic compound formation step (P-3), the organic-based coating liquid is coated on the inorganic-based porous coating films 13a and 13b with a predetermined covering dimension so that the inorganic-based porous coating films 13a and 13b are not exposed from a surface of the hydrophilic organic compound 14, and surfaces of the inorganic-based porous coating films 13a and 13b are covered with the organic-based coating liquid. Alternatively, the hydrophilic organic polymer coating liquid is coated on the inorganic-based porous coating films 13a and 13b so that uppermost layers of the inorganic-based porous coating films 13a and 13b (inorganic-based fine particles 14) are exposed from a surface of the hydrophilic organic polymer coating liquid.

In the hydrophilic organic compound formation step (P-3), the hydrophilic organic compound 14 included in the organic-based coating liquid, together with the organic-based coating liquid coated on the inorganic-based porous coating films 13a and 13b (surface 12 of the substrate 11), penetrates into the large number of fine voids 15 of the inorganic-based porous coating films 13a and 13b. In the hydrophilic organic compound formation step (P-3), the organic-based coating liquid that has penetrated into the voids 15 is dried. A solvent among the organic-based coating liquid that has penetrated into the voids 15 of the inorganic-based porous coating films 13a and 13b volatilizes, the hydrophilic organic compound 14 solidifies, and the hydrophilic organic compound 14 (hydrophilic organic film) bonds (joins) to the voids 15 (inorganic-based fine particles 14) of the inorganic-based porous coating films 13a and 13b and the surface 12 of the substrate 11, thereby forming the hydrophilic coating films 10A to 10D made of the inorganic-based porous coating films 13a and 13b and the hydrophilic organic compound 14 (hydrophilic organic film).

At the time of forming the hydrophilic coating films 10A to 10D in the hydrophilic organic compound formation step (P-3), the inorganic-based porous coating films 13a and 13b are not exposed from the surface of the hydrophilic organic compound 14, the hydrophilic organic compound 14 (hydrophilic organic film) covers the surfaces of the inorganic-based porous coating films 13a and 13b (inorganic-based fine particles 16), and the inorganic-based porous coating films 13a and 13b are buried in the hydrophilic organic compound 14.

In addition, at the time of forming the hydrophilic coating films 10A to 10D in the hydrophilic organic compound formation step (P-3), an uppermost layer of the hydrophilic organic compound 14 (hydrophilic organic film) is located slightly below the surfaces of the inorganic-based porous coating films 13a and 13b, uppermost layers of the inorganic-based porous coating films 13a and 13b (inorganic-based fine particles 16) are exposed upward from the uppermost layer of the hydrophilic organic compound 14, and portions (uppermost layers) of the inorganic-based porous coating films 13a and 13b (inorganic-based fine particles 16) exposed upward from the uppermost layer of the hydrophilic organic compound 14 form fine irregularities on the surface of the hydrophilic organic compound 14, and the portions (uppermost layers) forming the irregularities are coated with an ultrathin film of the hydrophilic organic compound 14 (hydrophilic organic film).

In the water washing step (P-4), water is caused to flow on surfaces of the hydrophilic coating films 10A to 10D formed of the inorganic-based porous coating films 13a and 13b and the hydrophilic organic compound 14 (hydrophilic organic film), and the hydrophilic coating films 10A to 10D are washed using water. In the water washing step (P-4), excess hydrophilic organic compound 14 weakly bonded to the inorganic-based porous coating films 13a and 13b, excluding the hydrophilic organic compound 14 strongly bonded to the inorganic-based porous coating films 13a and 13b among the hydrophilic organic compound 14, is washed away with water, and the hydrophilic organic compound 14 that does not contribute to hydrophilicity is removed from the hydrophilic coating films 10A to 10D.

In the hydrophilic coating film formation method, in the inorganic-based porous coating film formation step (P-2), the inorganic-based coating liquid that makes the inorganic-based porous coating films 13a and 13b is used, and the inorganic-based porous coating films 13a and 13b having an inorganic nanoporous structure having a large number of nanosized fine voids 15 are formed by a sol-gel method, and, in the hydrophilic organic compound formation step (P-3), the organic-based coating liquid that makes the hydrophilic organic compound 14 including a betaine polymer having a cationic site and an anionic site in the same molecule is used, the organic-based coating liquid is caused to penetrate into the large number of fine voids 15 of the inorganic-based porous coating films 13a and 13b, and the hydrophilic organic compound 14 forms the hydrophilic organic compound 14 (hydrophilic organic film) on the surface 12 of the substrate 11, so that the hydrophilic coating films 10A to 10D having excellent hydrophilicity and antifouling property, in which a contact angle with respect to a film surface is small and a contact area of water with respect to the film surface can be increased, can be made, and the hydrophilic coating films 10A to 10D capable of readily washing off adhering soil with water can be made.

In the hydrophilic coating film formation method, in the hydrophilic organic compound formation step (P-3), the hydrophilic organic compound 14 penetrates into the large number of fine voids 15 of the inorganic-based porous coating films 13a and 13b, and the hydrophilic organic compound 14 (hydrophilic organic film) bonds (joins) to the voids 15 (inorganic-based fine particles 14) of the inorganic-based porous coating films 13a and 13b and the surface 12 of the substrate 11, whereby the hydrophilic coating films 10A to 10D having excellent strength can be made, and the hydrophilic organic compound 14 does not peel off or disappear early from the hydrophilic coating films 10A to 10D due to stress from a use environment, so that the hydrophilic coating films 10A to 10D capable of preventing decreases in hydrophilicity and antifouling property can be made, and the hydrophilic coating films 10A to 10D capable of maintaining the hydrophilic function and the antifouling function by the hydrophilic organic compound 14 for a long period can be made.

In the hydrophilic coating film formation method, in the cleaning step (P-1), the coating surface 12 of the substrate 11 is cleaned using an alkaline detergent (for example, an alkaline detergent having a PH of 8 to 9), and the coating surface 12 of the substrate 11 is cleaned using an acidic liquid (for example, an acidic liquid having a PH of 1 to 2), whereby soil such as dust, oil, and organic matter adhering to the coating surface 12 of the substrate 11 can be reliably removed, and the hydrophilic coating films 10A to 10D having excellent hydrophilicity can be made on the surface 12 of the substrate 11 from which soil has been removed. In the hydrophilic coating film formation method, since the inorganic-based porous coating films 13a and 13b having an inorganic nanoporous structure are formed by a sol-gel method using at least one of silica sol, alumina sol, zirconia sol, titania sol, and ceria sol in the inorganic-based porous coating film formation step (P-2), the inorganic-based coating films 10A to 10D having a large number of nanosized fine voids 15 can be reliably formed on the coating surface 12 of the substrate 11.

In the hydrophilic coating film formation method, in the hydrophilic organic compound formation step (P-3), the inorganic-based porous coating films 13a and 13b are covered with the organic-based coating liquid so that the inorganic-based porous coating films 13a and 13b are not exposed from the surface of the hydrophilic organic compound 14, and the inorganic-based porous coating films 13a and 13b are buried in the hydrophilic organic compound 14 when the hydrophilic coating films 10A to 10D are formed, so that the hydrophilic coating films 10A to 10D capable of allowing the hydrophilic organic compound to exist for a long period can be made.

In the hydrophilic coating film formation method, in the water washing step (P-4), excess hydrophilic organic compound 14 weakly bonded to the voids 15 of the inorganic-based porous coating films 13a and 13b, excluding the hydrophilic organic compound 14 bonded (joined) to the voids 15 (inorganic-based fine particles 14) of the inorganic-based porous coating films 13a and 13b and the surface 12 of the substrate 11 among the hydrophilic organic compound 14, is washed away with water, whereby the hydrophilic organic compound 14 that does not contribute to hydrophilicity is removed from the hydrophilic coating films 10A to 10D, so that the hydrophilic coating films 10A to 10D including the hydrophilic organic compound 14 that is firmly bonded in bonding (joining) to the voids 15 (inorganic-based fine particles 14) of the inorganic-based porous coating films 13a and 13b and the surface 12 of the substrate 11 and has excellent hydrophilicity and antifouling property can be made.

As shown in Figs. 2 and 3 and Figs. 5 and 6, the hydrophilic coating films 10A to 10D made by the hydrophilic coating film formation method are formed of the inorganic-based porous coating films 13a and 13b having a large number of nanosized fine voids 15 and the hydrophilic organic compound 14 (hydrophilic organic film) that has penetrated into the voids 15 of the inorganic-based porous coating films 13a and 13b.

In the hydrophilic coating film 10A shown in Fig. 2, the hydrophilic organic compound 14 has penetrated into a large number of nanosized fine voids 15 of the inorganic-based porous coating film 13a formed by partial connection of a large number of adjacent substantially spherical inorganic-based fine particles 16 to each other, the hydrophilic organic compound 14 (hydrophilic organic film) is bonded (joined) to the inorganic-based fine particles 16 forming the inorganic-based porous coating film 13a and the surface 12 of the substrate 11, the hydrophilic organic compound 14 covers a surface of the inorganic-based porous coating film 13a, and the inorganic-based porous coating film 13a is buried in the hydrophilic organic compound 14 (hydrophilic organic film).

In the hydrophilic coating film 10B shown in Fig. 3, the hydrophilic organic compound 14 has penetrated into a large number of nanosized fine voids 15 of the inorganic-based porous coating film 13a of Fig. 1, the hydrophilic organic compound 14 (hydrophilic organic film) is bonded (joined) to the inorganic-based fine particles 16 forming the inorganic-based porous coating film 13a and the surface 12 of the substrate 11, the uppermost layer of the hydrophilic organic compound 14 is located slightly below the surface of the inorganic-based porous coating film 13a, and the uppermost layer of the inorganic-based porous coating film 13a (inorganic-based fine particles 16) is exposed upward from the uppermost layer of the hydrophilic organic compound 14 (hydrophilic organic film). In the hydrophilic coating film 10B of Fig. 3, a portion (uppermost layer) of the inorganic-based porous coating film 13a (inorganic-based fine particles 16) exposed upward from the uppermost layer of the hydrophilic organic compound 14 (hydrophilic organic film) forms fine irregularities on a surface of the hydrophilic coating film 10B, and a portion (uppermost layer) forming the irregularities is coated with an ultrathin film of the hydrophilic organic compound 14 (hydrophilic organic film).

In the hydrophilic coating film 10C shown in Fig. 5, the hydrophilic organic compound 14 has penetrated into a large number of nanosized fine voids 15 of the inorganic-based porous coating film 13b of Fig. 4, the hydrophilic organic compound 14 (hydrophilic organic film) is bonded (joined) to the inorganic-based fine particles 16 forming the inorganic-based porous coating film 13a and the surface 12 of the substrate 11, the hydrophilic organic compound 14 covers a surface of the inorganic-based porous coating film 13b, and the inorganic-based porous coating film 13b is buried in the hydrophilic organic compound 14 (hydrophilic organic film).

In the hydrophilic coating film 10D shown in Fig. 6, the hydrophilic organic compound 14 has penetrated into a large number of nanosized fine voids 15 of the inorganic-based porous coating film 13b of Fig. 4, the hydrophilic organic compound 14 (hydrophilic organic film) is bonded (joined) to the inorganic-based fine particles 14 forming the inorganic-based porous coating film 13a and the surface 12 of the substrate 11, the uppermost layer of the hydrophilic organic compound 14 is located slightly below the surface of the inorganic-based porous coating film 13b, and the uppermost layer of the inorganic-based porous coating film 13b (inorganic-based fine particles 16) is exposed upward from the uppermost layer of the hydrophilic organic compound 14 (hydrophilic organic film). In the hydrophilic coating film 10D of Fig. 6, a portion (uppermost layer) of the inorganic-based porous coating film 13b (inorganic-based fine particles 16) exposed upward from the uppermost layer of the hydrophilic organic compound 14 (hydrophilic organic film) forms fine irregularities on a surface of the hydrophilic coating film 10D, and a portion (uppermost layer) forming the irregularities is coated with an ultrathin film of the hydrophilic organic compound 14 (hydrophilic organic film).

In the hydrophilic coating films 10A to 10D, a porosity of the voids 15 formed in the inorganic-based porous coating films 13a and 13b is in a range of 20% or more and 70% or less with respect to a volume of the inorganic-based porous coating films 13a and 13b. When the porosity of the voids 15 is less than 20%, the voids 15 formed in the inorganic-based porous coating films 13a and 13b are few, hydrophilicity and antifouling property of the hydrophilic organic compound 14 (hydrophilic organic film) penetrating into the voids 15 of the inorganic-based porous coating films 13a and 13b cannot be sufficiently utilized, and excellent hydrophilicity and antifouling property cannot be imparted to the hydrophilic coating films 10A to 10D formed of the inorganic-based porous coating films 13a and 13b and the hydrophilic organic compound 14. When the porosity of the voids 15 exceeds 70%, the inorganic-based porous coating films 13a and 13b become fragile, strength of the hydrophilic coating films 10A to 10D formed of the inorganic-based porous coating films 13a and 13b and the hydrophilic organic compound 14 (hydrophilic organic film) decreases, and the surface 12 of the substrate 11 cannot be sufficiently protected by the hydrophilic coating films 10A to 10D.

In the hydrophilic coating films 10A to 10D, since the porosity of the voids 15 formed in the inorganic-based porous coating films 13a and 13b is in the above range, a sufficient number of fine voids 15 are formed in the inorganic-based porous coating films 13a and 13b, the hydrophilic organic compound 14 penetrates into the voids 15, excellent hydrophilicity and antifouling property of the hydrophilic organic compound 14 (hydrophilic organic film) can be sufficiently utilized, excellent hydrophilicity and antifouling property can be imparted to the hydrophilic coating films 10A to 10D, the hydrophilic coating films 10A to 10D have sufficient strength, and the coating surface 12 of the substrate 11 can be sufficiently protected by the hydrophilic coating films 10A to 10D.

In the hydrophilic coating films 10A to 10D, a proportion of the betaine polymer with respect to a total mass of the hydrophilic organic compound 14 constituting the hydrophilic coating films 10A to 10D is 20% or more. When the proportion of the betaine polymer with respect to the total mass of the hydrophilic organic compound 14 is less than 20%, the content of the betaine polymer in the hydrophilic organic compound 14 is small, and the hydrophilic function of the betaine polymer cannot be sufficiently utilized. Accordingly, the hydrophilic organic compound 14 made from the organic-based coating liquid cannot exhibit sufficient hydrophilicity and antifouling property, and excellent hydrophilicity and antifouling property cannot be imparted to the hydrophilic coating films 10A to 10D formed of the inorganic-based porous coating films 13a and 13b and the hydrophilic organic compound 14 (hydrophilic organic film).

Since, in the hydrophilic coating films 10A to 10D, the proportion, in the hydrophilic organic compound 14, of the betaine polymer having a cationic site and an anionic site in the same molecule is in the above range, the organic-based coating liquid includes a sufficient amount of the betaine polymer, excellent hydrophilicity of the betaine polymer can be sufficiently utilized, the hydrophilic organic compound 14 made from the organic-based coating liquid exhibits sufficient hydrophilicity and antifouling property, and excellent hydrophilicity and antifouling property can be imparted to the hydrophilic coating films 10A to 10D formed of the inorganic-based porous coating films 13a and 13b and the hydrophilic organic compound 14 (hydrophilic organic film).

The hydrophilic coating films 10A to 10D have a film thickness in a range of 0.01 µm or more and 3 µm or less, preferably a film thickness in a range of 0.1 µm or more and 0.6 µm or less. When the film thickness of the hydrophilic coating films 10A to 10D is less than 0.01 µm, the strength of the hydrophilic coating films 10A to 10D decreases, and the coating surface 12 of the substrate 11 cannot be sufficiently protected by the hydrophilic coating films 10A to 10D. When the film thickness of the hydrophilic coating films 10A to 10D exceeds 3 µm, the film thickness becomes thicker than necessary, flexibility of the hydrophilic coating films 10A to 10D decreases, and the hydrophilic coating films 10A to 10D cannot follow deformation of the coating surface 12 of the substrate 11.

Since the film thickness of the hydrophilic coating films 10A to 10D is in the above range, the hydrophilic coating films 10A to 10D retain a predetermined strength, the coating surface 12 of the substrate 11 can be sufficiently protected by the hydrophilic coating films 10A to 10D, the hydrophilic coating films 10A to 10D have excellent flexibility, the hydrophilic coating films 10A to 10D can follow deformation of the coating surface 12 of the substrate 11, and a covering state of the hydrophilic coating films 10A to 10D with respect to the coating surface 12 of the substrate 11 can be maintained.

In the hydrophilic coating films 10A to 10D, the inorganic-based porous coating films 13a and 13b constituting the hydrophilic coating films 10A to 10D include inorganic-based fine particles 16 of at least one type among silicon dioxide (SiO₂), aluminum oxide (Al₂O₃), zirconium oxide (ZrO₂), titanium oxide (TiO₂), and cerium oxide (CeO₂). In the hydrophilic coating films 10A to 10D, in a case where the inorganic-based porous coating films 13a and 13b include the inorganic-based fine particles 16 of silicon dioxide (SiO₂), the hydrophilic organic compound 14 is readily bonded to silicon dioxide, the hydrophilic organic compound 14 that has penetrated into the large number of fine voids 15 of the inorganic-based porous coating films 13a and 13b readily bonds to the voids 15 including silicon dioxide, and the hydrophilic organic compound 14 (hydrophilic organic film) can be firmly bonded to the voids 15 of the inorganic-based porous coating films 13a and 13b.

In the hydrophilic coating films 10A to 10D, in a case where the inorganic-based porous coating films 13a and 13b include the inorganic-based fine particles 16 of aluminum oxide (Al₂O₃), the hydrophilic organic compound 14 is readily bonded to aluminum oxide, the hydrophilic organic compound 14 (hydrophilic organic film) that has penetrated into the large number of fine voids 15 of the inorganic-based porous coating films 13a and 13b can be firmly bonded to the voids 15 including aluminum oxide, and salts such as magnesium, calcium, sodium, and silicon become less likely to adhere to the hydrophilic coating films 10A to 10D due to aluminum oxide, so that soil on the hydrophilic coating films 10A to 10D due to adhesion of salts such as magnesium, calcium, sodium, and silicon to the hydrophilic coating films 10A to 10D can be prevented.

In the hydrophilic coating films 10A to 10D, in a case where the inorganic-based porous coating films 13a and 13b include the inorganic-based fine particles 16 of zirconium oxide (ZrO₂), hardness of the inorganic-based porous coating films 13a and 13b can be increased, and rigidity of the hydrophilic coating films 10A to 10D can be increased. In the hydrophilic coating films 10A to 10D, in a case where the inorganic-based porous coating films 13a and 13b include the inorganic-based fine particles 16 of titanium oxide (TiO₂), light and water contact the inorganic-based fine particles 16 of titanium oxide, whereby surfaces of the hydrophilic coating films 10A to 10D are covered with hydrophilic groups, and an excellent self-cleaning effect can be imparted to the hydrophilic coating films 10A to 10D.

In the hydrophilic coating films 10A to 10D, in a case where the inorganic-based porous coating films 13a and 13b include the inorganic-based fine particles 16 of cerium oxide (CeO₂), hardness can be increased by cerium oxide, ultraviolet absorbing ability can also be provided, and the hydrophilic coating films 10A to 10D can have increased rigidity and have ultraviolet absorbing ability.

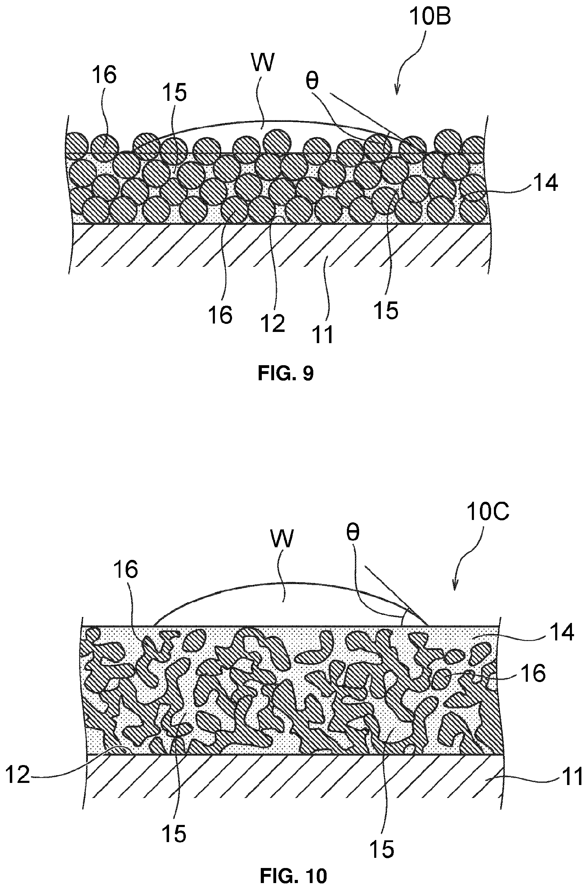

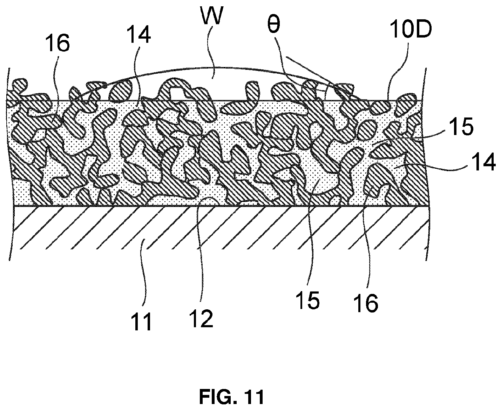

Fig. 8 is a diagram showing a contact angle θ of a water droplet W dropped onto the hydrophilic coating film 10A of Fig. 2, and Fig. 9 is a diagram showing a contact angle θ of a water droplet W dropped onto the hydrophilic coating film 10B of Fig. 3. Fig. 10 is a diagram showing a contact angle θ of a water droplet W dropped onto the hydrophilic coating film 10C of Fig. 5, and Fig. 11 is a diagram showing a contact angle θ of a water droplet W dropped onto the hydrophilic coating film 10D of Fig. 6.

In the hydrophilic coating films 10A to 10D shown in Figs. 2 and 3 and Figs. 5 and 6, the contact angle θ of the water droplet W is 10° or less. The contact angle θ of the water droplet W in the hydrophilic coating films 10A to 10D was measured based on JIS R3257 (Testing method of wettability of glass substrate). In the wettability test of JIS R3257, a test piece, a sample stage, an illumination device (light source), an optical reading device, and a syringe were prepared. The sample stage includes a mechanism for moving a position of the sample stage vertically and horizontally so that a water droplet placed at rest on the test piece is at the center of an optical axis between the illumination device and the optical reading device. The illumination device causes an image of the water droplet on the test piece to be made in a field of view of the optical reading device. The capacity of an injection cylinder of the syringe is 1 ml or less.

Conditions of the wettability test are room temperature: 25 ± 5°C, humidity: 50 ± 10%, water droplet volume: 1 µl, measurement time: 30 seconds, and water used: distilled water. An operation procedure of the wettability test is as follows. (1) The test apparatus is calibrated by a prescribed method. (2) The test piece on which the hydrophilic coating films 10A and 10B are formed is placed on a test stage. (3) Distilled water is placed in a clean glass beaker, and the distilled water is collected in the injection cylinder of the syringe. (4) The distilled water in the syringe is placed at rest as the water droplet W on the test piece on the sample stage. r and h of the water droplet W are promptly measured. Alternatively, θ/2 is read. (5) Measurement locations are at least five locations.

Wettability was indicated by an average value and a standard deviation value of data at five or more locations for the contact angle θ calculated based on the following (Formula 1) or the contact angle θ obtained from directly read θ/2.

(Formula 1): $θ = {2 tan}^{-1} h / r$

In (Formula 1), r is a radius (mm) of a surface of the water droplet W in contact with the test piece, and h is a height (mm) from a surface of the test piece to an apex of the water droplet W.

Since the hydrophilic coating films 10A to 10D have the contact angle θ of the water droplet W measured according to JIS R3257 of 10° or less, the hydrophilic coating films 10A to 10D have excellent hydrophilicity and antifouling property, the contact angle of water with respect to the film surfaces of the hydrophilic coating films 10A to 10D is small, the contact area of water with respect to the film surfaces of the hydrophilic coating films 10A to 10D can be increased, and, when the hydrophilic coating films 10A to 10D are washed with water, water broadly contacts the film surfaces of the hydrophilic coating films 10A to 10D, so that soil adhering to the hydrophilic coating films 10A to 10D can be readily washed off with water.

In the hydrophilic coating films 10B and 10D, a portion (uppermost layer) of the inorganic-based porous coating film 13b (inorganic-based fine particles 16) exposed upward from the uppermost layer of the hydrophilic organic polymer 14 (hydrophilic organic film) forms fine irregularities on the surfaces of the hydrophilic coating films 10B and 10D, so that the irregularities can further increase the contact area of water, and soil adhering to the hydrophilic coating films 10B and 10D can be readily and reliably washed off with water.

Since, in the hydrophilic coating films 10A to 10D, the inorganic-based porous coating films 13a and 13b have an inorganic nanoporous structure made by a sol-gel method using at least one of silica sol, alumina sol, zirconia sol, titania sol, and ceria sol, the hydrophilic organic compound 14 penetrates into the large number of fine voids 15 of the inorganic-based porous coating films 13a and 13b, and the hydrophilic organic compound 14 (hydrophilic organic film) is bonded (joined) to the voids 15 (inorganic-based fine particles 14) of the inorganic-based porous coating films 13a and 13b and the surface 12 of the substrate 11, the hydrophilic coating films 10A to 10D have excellent strength, the hydrophilic organic compound 14 does not peel off or disappear early from the hydrophilic coating films 10A to 10D due to stress from a use environment, decreases in hydrophilicity and antifouling property in the hydrophilic coating films 10A to 10D can be prevented, and the hydrophilic function and the antifouling function by the hydrophilic organic compound 14 can be maintained for a long period.

In the hydrophilic coating films 10A to 10D, because the hydrophilic organic compound 14 includes a betaine polymer having a cationic site and an anionic site in the same molecule, the hydrophilic organic compound 14 exhibits excellent hydrophilicity and antifouling property, the contact angle of water with respect to the film surfaces of the hydrophilic coating films 10A to 10D can be reliably reduced, the contact area of water with respect to the film surfaces of the hydrophilic coating films 10A to 10D can be reliably increased, and, when the hydrophilic coating films 10A to 10D are washed with water, water contacts a wide area of the film surfaces of the hydrophilic coating films 10A to 10D, so that soil adhering to the hydrophilic coating films 10A to 10D can be readily washed off with water.

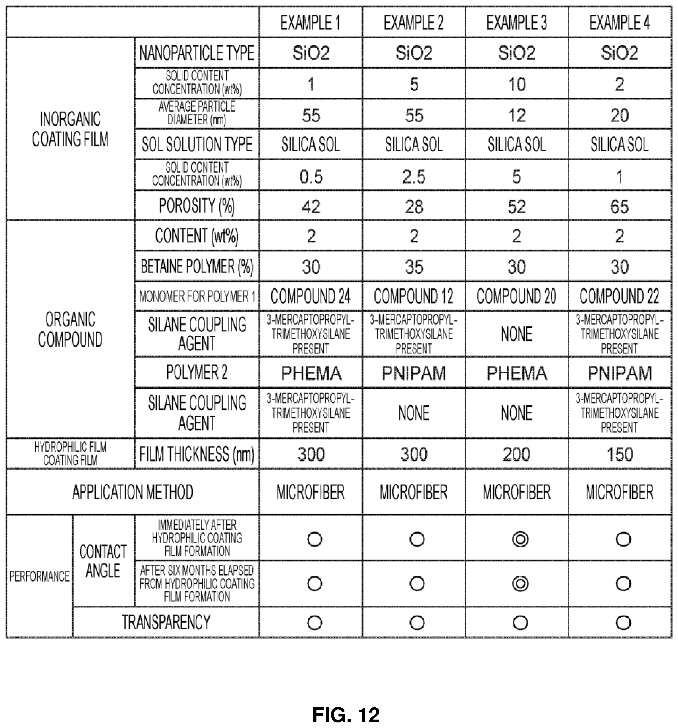

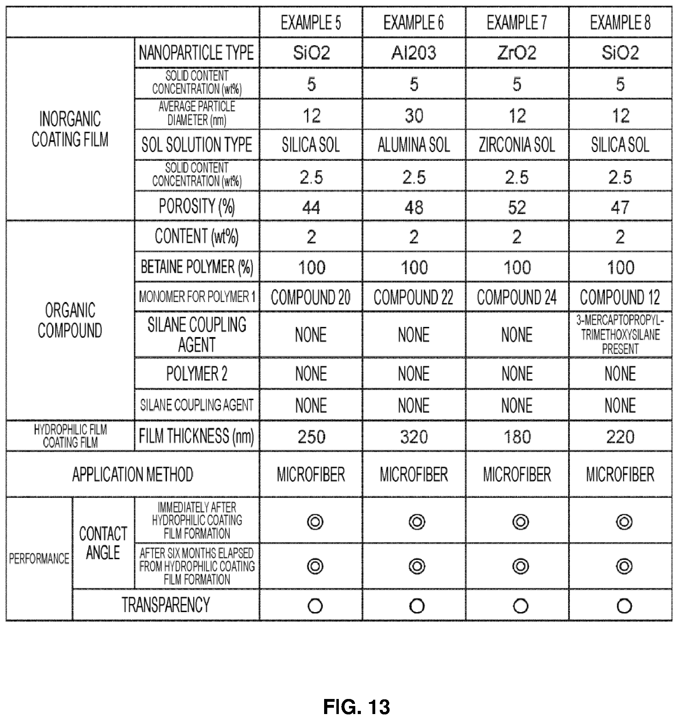

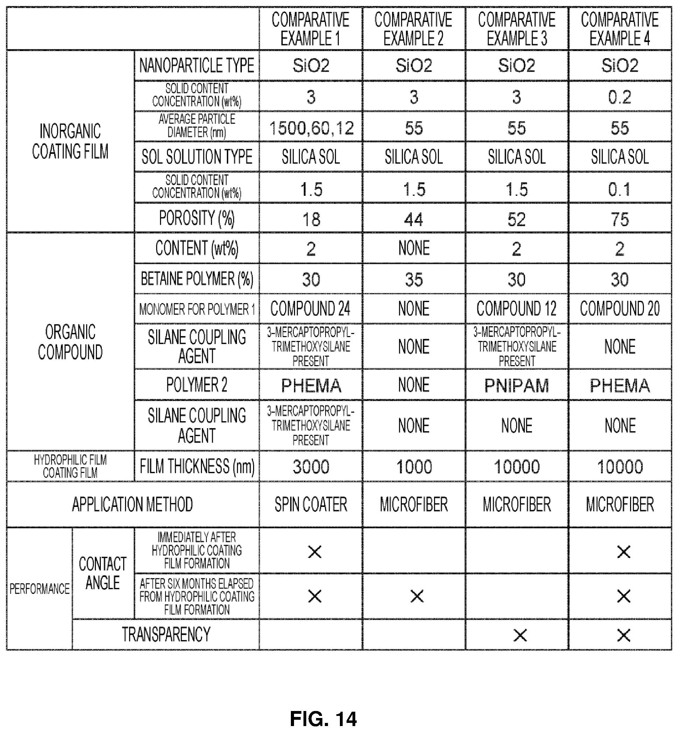

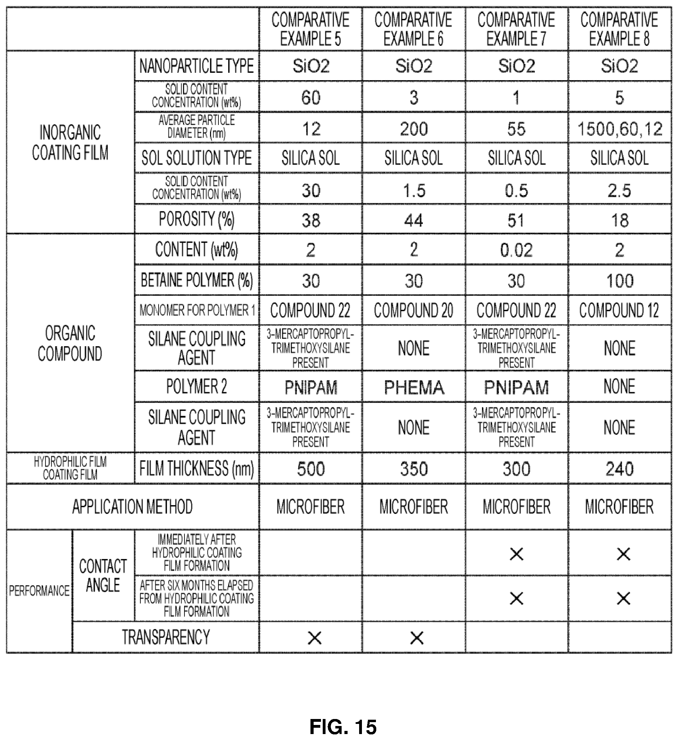

Fig. 12 is a diagram showing Examples 1 to 4 of the hydrophilic coating films 10A to 10D, and Fig. 13 is a diagram showing Examples 5 to 8 of the hydrophilic coating films 10A to 10D. Fig. 14 is a diagram showing Comparative Examples 1 to 4 of hydrophilic coating films, and Fig. 15 is a diagram showing Comparative Examples 5 to 8 of hydrophilic coating films. The hydrophilic coating films 10A to 10D shown in Example 1 of Fig. 12 have a film thickness of 300 (nm) of the inorganic-based porous coating films 13a and 13b forming the hydrophilic coating films 10A to 10D. An inorganic coating solution including silica nanoparticles having an average particle diameter of 55 (nm) and a solid content concentration of 1 (wt%) and a silica sol solution having a solid content concentration of 0.5 (wt%) was used. A content of the hydrophilic organic compound 14 in the organic-based coating liquid is 2 wt%, and a proportion of the betaine polymer in the hydrophilic organic compound 14 is 30%.

A method for synthesizing the hydrophilic organic compound 14 is shown below. Under nitrogen, 9.9 mmol of 2-(methacryloyloxy)ethyl 2-(trimethylammonio)ethyl phosphate, 0.1 mmol of 3-mercaptopropyltrimethoxysilane, and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Similarly, 9.9 mmol of 2-hydroxyethyl methacrylate, 0.1 mmol of 3-mercaptopropyltrimethoxysilane, and water were added to make 20 wt%. Next, 0.1 mmol of 2,2'-azobis[2-methyl-N-(2-hydroxyethyl)propionamide] was added, and stirring and heating were performed at 55°C for 3 hours to obtain a hydrophilic polymer solution. These solutions were mixed and water was added to obtain a 2 wt% hydrophilic coating solution containing 30% of the betaine polymer.

The coating method for the inorganic coating liquid and the organic-based coating liquid is fabric coating using microfiber. As a scanning electron microscope (SEM), XVision200TB manufactured by SII NanoTechnology Inc. or JSM-5500 manufactured by JEOL Ltd. was used. The film thickness was confirmed to be 300 nm by cross-sectional SEM observation. In addition, the porosity was found to be 42% by surface SEM observation.

The hydrophilic coating films 10A to 10D shown in Example 2 have a film thickness of 300 (nm) of the inorganic-based porous coating films 13a and 13b forming the hydrophilic coating films 10A to 10D. An inorganic coating solution including silica nanoparticles having an average particle diameter of 55 (nm) and a solid content concentration of 5 (wt%) and a silica sol solution having a solid content concentration of 2.5 (wt%) was used.

A content of the hydrophilic organic compound 14 in the organic-based coating liquid is 2 wt%, and a proportion of the betaine polymer in the hydrophilic organic compound 14 is 35%.

A method for synthesizing the hydrophilic organic compound 14 is shown below. Under nitrogen, 9.9 mmol of 3-{[2-(methacryloyloxy)ethyl]dimethylammonio}propane-1-sulfonic acid, 0.1 mmol of 3-mercaptopropyltrimethoxysilane, and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Similarly, 10 mmol of isopropylacrylamide and water were added to make 20 wt%. Next, 0.1 mmol of 2,2'-azobis[2-methyl-N-(2-hydroxyethyl)propionamide] was added, and stirring and heating were performed at 55°C for 3 hours to obtain a hydrophilic polymer solution.

The coating method for the inorganic coating liquid and the organic-based coating liquid is fabric coating using microfiber. These solutions were mixed and water was added to obtain a 2 wt% hydrophilic coating solution containing 35% of the betaine polymer. The film thickness was found to be 300 nm by cross-sectional SEM observation, and the porosity was found to be 28% by surface SEM observation.

The hydrophilic coating films 10A to 10D shown in Example 3 have a film thickness of 200 (nm) of the inorganic-based porous coating films 13a and 13b forming the hydrophilic coating films 10A to 10D. An inorganic coating solution including silica nanoparticles having an average particle diameter of 12 (nm) and a solid content concentration of 10 (wt%) and a silica sol solution having a solid content concentration of 5 (wt%) was used. A content of the hydrophilic organic compound 14 in the organic-based coating liquid is 2 wt%, and a proportion of the betaine polymer in the hydrophilic organic compound 14 is 30%.

A method for synthesizing the hydrophilic organic compound 14 is shown below. Under nitrogen, 10 mmol of 2-{[2-(methacryloyloxy)ethyl]dimethylammonio}acetic acid and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Similarly, 10.0 mmol of 2-hydroxyethyl methacrylate and water were added to make 20 wt%. Next, 0.1 mmol of 2,2'-azobis[2-methyl-N-(2-hydroxyethyl)propionamide] was added, and stirring and heating were performed at 55°C for 3 hours to obtain a hydrophilic polymer solution. These solutions were mixed and water was added to obtain a 2 wt% hydrophilic coating solution containing 30% of the betaine polymer.

The coating method for the inorganic coating liquid and the organic-based coating liquid is fabric coating using microfiber. The film thickness was found to be 200 nm by cross-sectional SEM observation, and the porosity was found to be 52% by surface SEM observation.

The hydrophilic coating films 10A to 10D shown in Example 4 have a film thickness of 150 (nm) of the inorganic-based porous coating films 13a and 13b forming the hydrophilic coating films 10A to 10D. An inorganic coating solution including silica nanoparticles having an average particle diameter of 20 (nm) and a solid content concentration of 2 (wt%) and a silica sol solution having a solid content concentration of 1 (wt%) was used. A content of the hydrophilic organic compound 14 in the organic-based coating liquid is 2 wt%, and a proportion of the betaine polymer in the hydrophilic organic compound 14 is 30%.

A method for synthesizing the hydrophilic organic compound 14 is shown below. Under nitrogen, 9.9 mmol of 3-[(3-acrylamidopropyl)dimethylammonio]propanoate, 0.1 mmol of 3-mercaptopropyltrimethoxysilane, and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Similarly, 9.9 mmol of isopropylacrylamide, 0.1 mmol of 3-mercaptopropyltrimethoxysilane, and water were added to make 20 wt%. Next, 0.1 mmol of 2,2'-azobis[2-methyl-N-(2-hydroxyethyl)propionamide] was added, and stirring and heating were performed at 55°C for 3 hours to obtain a hydrophilic polymer solution. These solutions were mixed and water was added to obtain a 2 wt% hydrophilic coating solution containing 30% of the betaine polymer.

The coating method for the inorganic coating liquid and the organic-based coating liquid is fabric coating using microfiber. The film thickness was found to be 150 nm by cross-sectional SEM observation, and the porosity was found to be 65% by surface SEM observation.

The hydrophilic coating films 10A to 10D shown in Example 5 have a film thickness of 250 (nm) of the inorganic-based porous coating films 13a and 13b forming the hydrophilic coating films 10A to 10D. An inorganic coating solution including silica nanoparticles having an average particle diameter of 12 (nm) and a solid content concentration of 5 (wt%) and a silica sol solution having a solid content concentration of 2.5 (wt%) was used. A content of the hydrophilic organic compound 14 in the organic-based coating liquid is 2 wt%, and a proportion of the betaine polymer in the hydrophilic organic compound 14 is 100%.

A method for synthesizing the hydrophilic organic compound 14 is shown below. Under nitrogen, 10 mmol of 2-{[2-(methacryloyloxy)ethyl]dimethylammonio}acetic acid and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Water was added to this solution to obtain a 2 wt% hydrophilic coating solution containing 100% of the betaine polymer.

The coating method for the inorganic coating liquid and the organic-based coating liquid is fabric coating using microfiber. The film thickness was found to be 250 nm by cross-sectional SEM observation, and the porosity was found to be 44% by surface SEM observation.

The hydrophilic coating films 10A to 10D shown in Example 6 have a film thickness of 320 (nm) of the inorganic-based porous coating films 13a and 13b forming the hydrophilic coating films 10A to 10D. An inorganic coating solution including alumina nanoparticles having an average particle diameter of 30 (nm) and a solid content concentration of 5 (wt%) and an alumina sol solution having a solid content concentration of 2.5 (wt%) was used. A content of the hydrophilic organic compound 14 in the organic-based coating liquid is 2 wt%, and a proportion of the betaine polymer in the hydrophilic organic compound 14 is 100%.

A method for synthesizing the hydrophilic organic compound 14 is shown below. Under nitrogen, 10 mmol of 3-[(3-acrylamidopropyl)dimethylammonio]propanoate and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Water was added to this solution to obtain a 2 wt% hydrophilic coating solution containing 100% of the betaine polymer.

The coating method for the inorganic coating liquid and the organic-based coating liquid is fabric coating using microfiber. The film thickness was found to be 320 nm by cross-sectional SEM observation, and the porosity was found to be 48% by surface SEM observation.

The hydrophilic coating films 10A to 10D shown in Example 7 have a film thickness of 180 (nm) of the inorganic-based porous coating films 13a and 13b forming the hydrophilic coating films 10A to 10D. An inorganic coating solution including zirconia nanoparticles having an average particle diameter of 12 (nm) and a solid content concentration of 5 (wt%) and a zirconia sol solution having a solid content concentration of 2.5 (wt%) was used. A content of the hydrophilic organic compound 14 in the organic-based coating liquid is 2 wt%, and a proportion of the betaine polymer in the hydrophilic organic compound 14 is 100%.

A method for synthesizing the hydrophilic organic compound 14 is shown below. Under nitrogen, 10 mmol of 2-(methacryloyloxy)ethyl 2-(trimethylammonio)ethyl phosphate and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Water was added to this solution to obtain a 2 wt% hydrophilic coating solution containing 100% of the betaine polymer.

The coating method for the inorganic coating liquid and the organic-based coating liquid is fabric coating using microfiber. The film thickness was found to be 180 nm by cross-sectional SEM observation, and the porosity was found to be 52% by surface SEM observation.

The hydrophilic coating films 10A to 10D shown in Example 8 have a film thickness of 220 (nm) of the inorganic-based porous coating films 13a and 13b forming the hydrophilic coating films 10A to 10D. An inorganic coating solution including silica nanoparticles having an average particle diameter of 12 (nm) and a solid content concentration of 5 (wt%) and silica nanosol having a solid content concentration of 2.5 (wt%) was used. A content of the hydrophilic organic compound 14 in the organic-based coating liquid is 2 wt%, and a proportion of the betaine polymer in the hydrophilic organic compound 14 is 100%.

A method for synthesizing the hydrophilic organic compound 14 is shown below. Under nitrogen, 9.9 mmol of 3-{[2-(methacryloyloxy)ethyl]dimethylammonio}propane-1-sulfonic acid, 0.1 mmol of 3-mercaptopropyltrimethoxysilane, and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Water was added to this solution to obtain a 2 wt% hydrophilic coating solution containing 100% of the betaine polymer.

The coating method for the inorganic coating liquid and the organic-based coating liquid is fabric coating using microfiber. The film thickness was found to be 220 nm by cross-sectional SEM observation, and the porosity was found to be 47% by surface SEM observation.

In the hydrophilic coating films 10A to 10D shown in Examples 1 to 4, the contact angle θ of the water droplet W immediately after the coating films 10A to 10D were formed on the coating surface 12 of the substrate 11 was ○ (20° or less, good) or ⊙ (10° or less, further good), the contact angle θ of the water droplet W after six months had elapsed since the coating films 10A to 10D were formed on the coating surface 12 of the substrate 11 was ○ (20° or less, good) or ⊙ (10° or less, further good), and the transparency of the coating films 10A to 10D was ○ (no cloudiness, good).

The hydrophilic coating film shown in Comparative Example 1 of Fig. 14 has a film thickness of 3000 (nm) of the inorganic-based porous coating film forming the hydrophilic coating film. An inorganic coating solution was used, the inorganic coating solution including silica nanoparticles having average particle diameters of 1500 (nm), 60 (nm), and 12 (nm) mixed to have a solid content concentration of 3 (wt%), and a silica sol solution having a solid content concentration of 1.5 (wt%). A content of the hydrophilic organic compound in the organic-based coating liquid is 2 wt%, and a proportion of the betaine polymer in the hydrophilic organic compound is 30%.

A method for synthesizing the hydrophilic organic compound 14 is shown below. Under nitrogen, 9.9 mmol of 2-(methacryloyloxy)ethyl 2-(trimethylammonio)ethyl phosphate, 0.1 mmol of 3-mercaptopropyltrimethoxysilane, and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Similarly, 9.9 mmol of 2-hydroxyethyl methacrylate, 0.1 mmol of 3-mercaptopropyltrimethoxysilane, and water were added to make 20 wt%. Next, 0.1 mmol of 2,2'-azobis[2-methyl-N-(2-hydroxyethyl)propionamide] was added, and stirring and heating were performed at 55°C for 3 hours to obtain a hydrophilic polymer solution. These solutions were mixed and water was added to obtain a 2 wt% hydrophilic coating solution containing 30% of the betaine polymer.

The coating method for the inorganic coating liquid and the organic-based coating liquid is a spin coater. The film thickness was found to be 3000 nm by cross-sectional SEM observation immediately after coating, and the porosity was found to be 18% by surface SEM observation. In the hydrophilic coating film shown in Comparative Example 1, the contact angle θ of the water droplet W immediately after the coating film was formed on the surface 12 of the substrate 11 was × (more than 20°, poor), and the contact angle θ of the water droplet W after six months had elapsed since the coating film was formed on the surface 12 of the substrate 11 was × (more than 20°, poor).

The hydrophilic coating film shown in Comparative Example 2 of Fig. 14 has a film thickness of 1000 (nm) of the inorganic-based porous coating film forming the hydrophilic coating film. An inorganic coating solution including silica nanoparticles having an average particle diameter of 55 (nm) and a solid content concentration of 3 (wt%) and a silica sol solution having a solid content concentration of 1.5 (wt%) was used. The organic-based coating liquid was not applied. The coating method for the inorganic coating liquid and the organic-based coating liquid is fabric coating using microfiber. The film thickness was found to be 1000 nm by cross-sectional SEM observation immediately after coating, and the porosity was found to be 44% by surface SEM observation. In the hydrophilic coating film shown in Comparative Example 2, the contact angle θ of the water droplet W after six months had elapsed since the coating film was formed on the surface 12 of the substrate 11 was × (more than 20°, poor).

The hydrophilic coating film shown in Comparative Example 3 of Fig. 14 has a film thickness of 10000 (nm) of the inorganic-based porous coating film forming the hydrophilic coating film. An inorganic coating solution including silica nanoparticles having an average particle diameter of 55 (nm) and a solid content concentration of 3 (wt%) and a silica sol solution having a solid content concentration of 1.5 (wt%) was used. A content of the hydrophilic organic compound in the organic-based coating liquid is 2 wt%, and a proportion of the betaine polymer in the hydrophilic organic compound is 30%.

A method for synthesizing the hydrophilic organic compound 14 is shown below. Under nitrogen, 9.9 mmol of 3-{[2-(methacryloyloxy)ethyl]dimethylammonio}propane-1-sulfonic acid, 0.1 mmol of 3-mercaptopropyltrimethoxysilane, and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Similarly, 10 mmol of isopropylacrylamide and water were added to make 20 wt%. Next, 0.1 mmol of 2,2'-azobis[2-methyl-N-(2-hydroxyethyl)propionamide] was added, and stirring and heating were performed at 55°C for 3 hours to obtain a hydrophilic polymer solution. These solutions were mixed and water was added to obtain a 2 wt% hydrophilic coating solution containing 30% of the betaine polymer.

The coating method for the inorganic coating liquid and the organic-based coating liquid is fabric coating using microfiber. The film thickness was found to be 10000 nm by cross-sectional SEM observation, and the porosity was found to be 52% by surface SEM observation. In the hydrophilic coating film shown in Comparative Example 2, the transparency of the coating film was × (cloudiness present, poor).

The hydrophilic coating film shown in Comparative Example 4 of Fig. 14 has a film thickness of 10000 (nm) of the inorganic-based porous coating film forming the hydrophilic coating film. An inorganic coating solution including silica nanoparticles having an average particle diameter of 55 (nm) and a solid content concentration of 0.2 (wt%) and a silica sol solution having a solid content concentration of 0.1 (wt%) was used. A content of the hydrophilic organic compound in the organic-based coating liquid is 2 wt%, and a proportion of the betaine polymer in the hydrophilic organic compound is 30%.

A method for synthesizing the hydrophilic organic compound 14 is shown below. Under nitrogen, 10 mmol of 2-{[2-(methacryloyloxy)ethyl]dimethylammonio}acetic acid and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Similarly, 10.0 mmol of 2-hydroxyethyl methacrylate and water were added to make 20 wt%. Next, 0.1 mmol of 2,2'-azobis[2-methyl-N-(2-hydroxyethyl)propionamide] was added, and stirring and heating were performed at 55°C for 3 hours to obtain a hydrophilic polymer solution. These solutions were mixed and water was added to obtain a 2 wt% hydrophilic coating solution containing 30% of the betaine polymer.

The coating method for the inorganic coating liquid and the organic-based coating liquid is fabric coating using microfiber. The film thickness was found to be 10000 nm by cross-sectional SEM observation, and the porosity was found to be 75% by surface SEM observation. In the hydrophilic coating film shown in Comparative Example 4, the contact angle θ of the water droplet W immediately after the coating film was formed on the surface 12 of the substrate 11 was × (more than 20°, poor), the contact angle θ of the water droplet W after six months had elapsed since the coating film was formed on the surface 12 of the substrate 11 was × (more than 20°, poor), and the transparency of the coating film was × (cloudiness present, poor).

The hydrophilic coating film shown in Comparative Example 5 of Fig. 15 has a film thickness of 500 (nm) of the inorganic-based porous coating film forming the hydrophilic coating film. An inorganic coating solution including silica nanoparticles having an average particle diameter of 12 (nm) and a solid content concentration of 60 (wt%) and a silica sol solution having a solid content concentration of 30 (wt%) was used. A content of the hydrophilic organic compound in the organic-based coating liquid is 2 wt%, and a proportion of the betaine polymer in the hydrophilic organic compound is 30%.

A method for synthesizing the hydrophilic organic compound 14 is shown below. Under nitrogen, 9.9 mmol of 3-[(3-acrylamidopropyl)dimethylammonio]propanoate, 0.1 mmol of 3-mercaptopropyltrimethoxysilane, and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Similarly, 9.9 mmol of isopropylacrylamide, 0.1 mmol of 3-mercaptopropyltrimethoxysilane, and water were added to make 20 wt%. Next, 0.1 mmol of 2,2'-azobis[2-methyl-N-(2-hydroxyethyl)propionamide] was added, and stirring and heating were performed at 55°C for 3 hours to obtain a hydrophilic polymer solution. These solutions were mixed and water was added to obtain a 2 wt% hydrophilic coating solution containing 30% of the betaine polymer.

The coating method for the inorganic coating liquid and the organic-based coating liquid is fabric coating using microfiber. The film thickness was found to be 500 nm by cross-sectional SEM observation, and the porosity was found to be 38% by surface SEM observation. In the hydrophilic coating film shown in Comparative Example 5, the transparency of the coating film was × (cloudiness present, poor).

The hydrophilic coating film shown in Comparative Example 6 of Fig. 15 has a film thickness of 350 (nm) of the inorganic-based porous coating film forming the hydrophilic coating film. An inorganic coating solution including silica nanoparticles having an average particle diameter of 200 (nm) and a solid content concentration of 3 (wt%) and a silica sol solution having a solid content concentration of 1.5 (wt%) was used. A content of the hydrophilic organic compound in the organic-based coating liquid is 2 wt%, and a proportion of the betaine polymer in the hydrophilic organic compound is 30%.

A method for synthesizing the hydrophilic organic compound 14 is shown below. Under nitrogen, 9.9 mmol of 2-{[2-(methacryloyloxy)ethyl]dimethylammonia}acetic acid, 0.1 mmol of 3-mercaptopropyltrimethoxysilane, and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Similarly, 9.9 mmol of isopropylacrylamide, 0.1 mmol of 3-mercaptopropyltrimethoxysilane, and water were added to make 20 wt%. Next, 0.1 mmol of 2,2'-azobis[2-methyl-N-(2-hydroxyethyl)propionamide] was added, and stirring and heating were performed at 55°C for 3 hours to obtain a hydrophilic polymer solution. These solutions were mixed and water was added to obtain a 2 wt% hydrophilic coating solution containing 30% of the betaine polymer.

The coating method for the inorganic coating liquid and the organic-based coating liquid is fabric coating using microfiber. The film thickness was found to be 350 nm by cross-sectional SEM observation, and the porosity was found to be 44% by surface SEM observation. In the hydrophilic coating film shown in Comparative Example 6, the transparency of the coating film was × (cloudiness present, poor).

The hydrophilic coating film shown in Comparative Example 7 of Fig. 15 has a film thickness of 300 (nm) of the inorganic-based porous coating film forming the hydrophilic coating film. An inorganic coating solution including silica nanoparticles having an average particle diameter of 55 (nm) and a solid content concentration of 1 (wt%) and a silica sol solution having a solid content concentration of 0.5 (wt%) was used. A content of the hydrophilic organic compound in the organic-based coating liquid is 0.02 wt%, and a proportion of the betaine polymer in the hydrophilic organic compound is 30%.

A method for synthesizing the hydrophilic organic compound 14 is shown below. Under nitrogen, 9.9 mmol of 3-[(3-acrylamidopropyl)dimethylammonio]propanoate, 0.1 mmol of 3-mercaptopropyltrimethoxysilane, and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Similarly, 9.9 mmol of isopropylacrylamide, 0.1 mmol of 3-mercaptopropyltrimethoxysilane, and water were added to make 20 wt%. Next, 0.1 mmol of 2,2'-azobis[2-methyl-N-(2-hydroxyethyl)propionamide] was added, and stirring and heating were performed at 55°C for 3 hours to obtain a hydrophilic polymer solution. These solutions were mixed and water was added to obtain a 2 wt% hydrophilic coating solution containing 30% of the betaine polymer.

The coating method for the inorganic coating liquid and the organic-based coating liquid is fabric coating using microfiber. The film thickness was found to be 300 nm by cross-sectional SEM observation, and the porosity was found to be 51% by surface SEM observation. In the hydrophilic coating film shown in Comparative Example 7, the contact angle θ of the water droplet W immediately after the coating film was formed on the surface 12 of the substrate 11 was × (more than 20°, poor), the contact angle θ of the water droplet W after six months had elapsed since the coating film was formed on the surface 12 of the substrate 11 was × (more than 20°, poor), and the transparency of the coating film was × (cloudiness present, poor).

The hydrophilic coating film shown in Comparative Example 8 of Fig. 15 has a film thickness of 240 (nm) of the inorganic-based porous coating film forming the hydrophilic coating film. An inorganic coating solution was used, the inorganic coating solution including silica nanoparticles having average particle diameters of 1500 (nm), 60 (nm), and 12 (nm) mixed to have a solid content concentration of 5 (wt%), and a silica nanosol solution having a solid content concentration of 2.5 (wt%). A content of the hydrophilic organic compound in the organic-based coating liquid is 2 wt%, and a proportion of the betaine polymer in the hydrophilic organic compound is 100%.

A method for synthesizing the hydrophilic organic compound 14 is shown below. Under nitrogen, 10 mmol of 3-{[2-(methacryloyloxy)ethyl]dimethylammonio}propane-1-sulfonic acid and water were added to a round-bottom flask to make 20 wt%. Next, 0.1 mmol of 2,2'-azobis[2-methyl-N-(2-hydroxyethyl)propionamide] was added, and stirring and heating were performed at 55°C for 3 hours to obtain a betaine polymer solution. Water was added to this solution to obtain a 2 wt% hydrophilic coating solution containing 100% of the betaine polymer.

The coating method for the inorganic coating liquid and the organic-based coating liquid is fabric coating using microfiber. The film thickness was found to be 240 nm by cross-sectional SEM observation immediately after coating, and the porosity was found to be 18% by surface SEM observation. In the hydrophilic coating film shown in Comparative Example 8, the contact angle θ of the water droplet W immediately after the coating film was formed on the surface 12 of the substrate 11 was × (more than 20°, poor), and the contact angle θ of the water droplet W after six months had elapsed since the coating film was formed on the coating surface 12 of the substrate 11 was × (more than 20°, poor).

In the hydrophilic coating films 10A to 10D shown in Examples 1 to 8, all of the film thickness, the solid content concentration of the inorganic-based fine particles 16, the average particle diameter of the inorganic-based fine particles 16, the content of the hydrophilic organic compound, and the proportion of the betaine polymer in the hydrophilic organic compound are within the numerical ranges of the present invention, and the contact angle θ of the water droplet W immediately after the coating films 10A to 10D were formed on the coating surface 12 of the substrate 11, the contact angle θ of the water droplet W after six months had elapsed since the coating films 10A to 10D were formed on the coating surface 12 of the substrate 11, and the transparency of the coating films 10A to 10D are good; whereas, in the hydrophilic coating films shown in Comparative Examples 1 to 8, any of the film thickness, the solid content concentration of the inorganic-based fine particles 16, the average particle diameter of the inorganic-based fine particles 16, the content of the hydrophilic organic compound, and the proportion of the betaine polymer in the hydrophilic organic compound is outside the numerical ranges of the present invention, and at least one of the contact angle θ of the water droplet W immediately after the coating film was formed on the coating surface 12 of the substrate 11, the contact angle θ of the water droplet W after six months had elapsed since the coating film was formed on the coating surface 12 of the substrate 11, and the transparency of the coating film was found to be poor.

### Reference Signs List

- 10A to 10D: Hydrophilic coating film
- 11: Substrate
- 12: Surface (front surface, back surface)
- 13a: Inorganic-based porous coating film
- 13b: Inorganic-based porous coating film
- 14: Hydrophilic organic compound
- 15: Void
- 16: Inorganic-based fine particle

## Claims

1. A hydrophilic coating film comprising: an inorganic-based porous coating film having a large number of nanosized voids; and a hydrophilic organic compound that has penetrated into the voids of the inorganic-based porous coating film, wherein a contact angle of water measured according to JIS R3257 is 20° or less.

2. The hydrophilic coating film according to claim 1, wherein the contact angle of water measured according to JIS R3257 is 10° or less.

3. The hydrophilic coating film according to claim 1, wherein the inorganic-based porous coating film includes inorganic-based fine particles of at least one type among silicon dioxide (SiO₂), aluminum oxide (Al₂O₃), zirconium oxide (ZrO₂), titanium oxide (TiO₂), and cerium oxide (CeO₂).

4. The hydrophilic coating film according to claim 1, wherein the inorganic-based porous coating film has an inorganic nanoporous structure made by a sol-gel method using at least one of silica sol, alumina sol, zirconia sol, titania sol, and ceria sol.

5. The hydrophilic coating film according to claim 1, wherein the hydrophilic organic compound includes a betaine polymer having a cationic site and an anionic site in the same molecule.

6. The hydrophilic coating film according to claim 5, wherein a proportion of the betaine polymer in the hydrophilic organic compound is 20% or more.

7. The hydrophilic coating film according to claim 1, wherein a porosity of the voids formed in the inorganic-based porous coating film is in a range of 20% to 70% with respect to a volume of the inorganic-based porous coating film.

8. The hydrophilic coating film according to claim 1, wherein a film thickness of the hydrophilic coating film is in a range of 0.01 to 3 µm.

9. The hydrophilic coating film according to claim 1, wherein the hydrophilic organic compound covers a surface of the inorganic-based porous coating film while penetrating into the voids of the inorganic-based porous coating film.

10. The hydrophilic coating film according to claim 1, wherein an uppermost layer of the hydrophilic organic compound is located slightly below a surface of the inorganic-based porous coating film, and a portion of the inorganic-based porous coating film exposed upward from the uppermost layer of the hydrophilic organic compound is coated with an ultrathin film of the hydrophilic organic compound and forms fine irregularities on a surface of the hydrophilic coating film.

11. A hydrophilic coating liquid comprising: an inorganic-based coating liquid that makes an inorganic-based porous coating film having a large number of nanosized voids; and an organic-based coating liquid that includes a betaine polymer having a cationic site and an anionic site in the same molecule and makes a hydrophilic organic compound covering the inorganic-based porous coating film in a state in which the hydrophilic organic compound has penetrated into the voids of the inorganic-based porous coating film.

12. The hydrophilic coating liquid according to claim 11, wherein a proportion of the betaine polymer in the hydrophilic organic compound is 20% or more.

13. The hydrophilic coating liquid according to claim 11, wherein the inorganic-based coating liquid includes inorganic-based fine particles of at least one type among silicon dioxide (SiO₂), aluminum oxide (Al₂O₃), zirconium oxide (ZrO₂), titanium oxide (TiO₂), and cerium oxide (CeO₂), and a solid content concentration of the inorganic-based fine particles in the inorganic-based coating liquid is 0.3 to 50 wt%.

14. The hydrophilic coating liquid according to claim 13, wherein an average particle diameter of the inorganic-based fine particles included in the inorganic-based coating liquid is 1 µm or less.

15. The hydrophilic coating liquid according to claim 11, wherein a content of the hydrophilic organic compound in the organic-based coating liquid is in a range of 0.1 to 20 wt% with respect to a total weight of the organic-based coating liquid.

16. A method for forming a hydrophilic coating film, the hydrophilic coating film being made of an inorganic-based porous coating film having a large number of nanosized voids and a hydrophilic organic compound, the method for forming a hydrophilic coating film comprising:
a cleaning step of, after cleaning a surface of a predetermined substrate with an alkaline detergent, cleaning the surface of the substrate with an acidic liquid; an inorganic-based porous coating film formation step of coating an inorganic-based coating liquid including inorganic-based fine particles on the surface of the substrate and forming the inorganic-based porous coating film in which an inorganic nanoporous structure having the large number of nanosized voids has been made by a sol-gel method; a hydrophilic organic compound formation step of coating an organic-based coating liquid including a betaine polymer having a cationic site and an anionic site in the same molecule on the surface of the substrate and forming, on the surface of the substrate, the hydrophilic organic compound including the betaine polymer in a state in which the organic-based coating liquid has penetrated into the voids of the inorganic-based porous coating film; and a water washing step of washing, with water, a surface of the hydrophilic coating film formed of the inorganic-based porous coating film and the hydrophilic organic compound.

17. The method for forming a hydrophilic coating film according to claim 16, wherein, in the inorganic-based porous coating film formation step, the inorganic-based porous coating film having an inorganic nanoporous structure is formed by a sol-gel method using at least one of silica sol, alumina sol, zirconia sol, titania sol, and ceria sol.

18. The method for forming a hydrophilic coating film according to claim 16, wherein, in the hydrophilic organic compound formation step, the inorganic-based porous coating film is covered with the organic-based coating liquid so that the inorganic-based porous coating film is not exposed from a surface of the hydrophilic organic compound, and the inorganic-based porous coating film is buried in the hydrophilic organic compound when the hydrophilic coating film is formed.

19. The method for forming a hydrophilic coating film according to claim 16, wherein, in the hydrophilic organic compound formation step, the inorganic-based coating liquid is coated on the surface of the substrate in a state in which the inorganic-based coating liquid is positioned slightly below a surface of the inorganic-based porous coating film so that the inorganic-based porous coating film is exposed upward from an uppermost layer of the hydrophilic organic compound, and, when the hydrophilic coating film is formed, the inorganic-based porous coating film is exposed upward from the uppermost layer of the hydrophilic organic compound, and a portion of the inorganic-based porous coating film exposed upward from the uppermost layer of the hydrophilic organic compound is coated with an ultrathin film of the hydrophilic organic compound and forms fine irregularities on a surface of the hydrophilic coating film.

20. The method for forming a hydrophilic coating film according to claim 16, wherein, in the water washing step, excess hydrophilic organic compound weakly bonded to the voids of the inorganic-based porous coating film, excluding the hydrophilic organic compound strongly bonded to the voids of the inorganic-based porous coating film among the hydrophilic organic compound, is washed away with water, and the hydrophilic organic compound that does not contribute to hydrophilicity is removed from the hydrophilic coating film.
